# EUROPEAN PATENT APPLICATION

(11) **EP 4 398 376 A1**
(43) Date of publication of application: **10.07.2024**
(21) Application number: 22880217.9
(22) Date of filing: 09.10.2022
(51) Int. Cl.: H01M 10/42

(54) **BATTERY SYSTEM AND POWER SUPPLY SYSTEM**

(30) Priority: 11.10.2021 CN 202111183511
(71) Applicant: Huawei Digital Power Technologies Co., Ltd., Shenzhen, Guangdong 518043 (CN)
(72) Inventor: TUO, Hong, Shenzhen, Guangdong 518043 (CN); CAI, Yi, Shenzhen, Guangdong 518043 (CN); LI, Wenguang, Shenzhen, Guangdong 518043 (CN); CHEN, Baoguo, Shenzhen, Guangdong 518043 (CN)
(74) Representative: Maiwald GmbH
(86) International application number: PCT/CN2022/124030
(87) International publication number: WO 2023/061278

(57) **Abstract**

This application provides a battery system and a power supply system. The battery system includes a battery pack and a battery management system. The battery management system includes a sampling control unit, a DC/DC conversion unit, and an energy storage unit. When the battery pack needs to be heated, based on battery parameters of the battery pack and a voltage and a current limit value of the DC/DC conversion unit, the sampling control unit may control, in each of at least one consecutive first cycle, the battery pack to discharge to the energy storage unit by using the DC/DC conversion unit; control, in each of at least one consecutive second cycle, the energy storage unit to charge the battery pack by using the DC/DC conversion unit; and control, in the at least one consecutive first cycle and the at least one consecutive second cycle, an average charge/discharge current value of the battery pack to be less than or equal to a charge/discharge current limit value. According to this application, the battery pack can be uniformly heated, to improve heating efficiency and a heating speed. A system structure is simple and applicability is high.

## Description

This application claims priority to Chinese Patent Application No. 202111183511.8, filed with the China National Intellectual Property Administration on October 11, 2021 and entitled "BATTERY SYSTEM AND POWER SUPPLY SYSTEM", which is incorporated herein by reference in its entirety.

### TECHNICAL FIELD

This application relates to the field of power electronic technologies, and in particular, to a battery system and a power supply system.

### BACKGROUND

With rapid development of lithium-ion batteries, the lithium-ion batteries may be widely used in fields such as the battery energy storage field and the electric vehicle field. However, when the lithium-ion battery (which may be referred to as a lithium battery for short) is used in a low-temperature environment, a discharge capacity of the lithium battery is reduced; and when the lithium battery is charged in this case, a lithium dendrite may be formed on a diaphragm of the lithium battery, increasing a risk of thermal runaway of the battery. Therefore, how to charge and discharge the lithium battery in the low-temperature environment is particularly important.

During research and practice, the inventor of this application finds that, in the conventional technology, a device such as a heating film or a heater (for example, a positive temperature coefficient (positive temperature coefficient, PTC) heater) may be disposed inside a battery module, and the battery is heated by using the heating film or the PTC heater, to increase a battery temperature and charge the battery, so as to reduce the risk of thermal runaway of the battery. However, heating the battery by using the heating film or the PTC heater causes nonuniform heat transfer and low heating efficiency. In addition, an external component such as the heating film or the PTC heater needs to be added. This increases a volume of the battery module, increases structural complexity of the battery module, and leads to poor applicability.

### SUMMARY

This application provides a battery system and a power supply system, to uniformly heat a battery pack. In this way, heating efficiency and a heating speed are improved, system structure is simple, and applicability is high.

According to a first aspect, this application provides a battery system. The battery system includes a battery pack and a battery management system. The battery management system may be connected to the battery pack. The battery management system may include a sampling control unit, a direct current (direct current, DC)/DC conversion unit, and an energy storage unit. The DC/DC conversion unit and the energy storage unit are connected in parallel. The battery pack and the battery management system herein may form a battery module, and may be applied to a plurality of battery use fields such as the communication field and the electric vehicle field. The battery pack may include but is not limited to a plurality of batteries such as a lithium-ion battery and a sodium-ion battery. A circuit topology of the DC/DC conversion unit may include but is not limited to a bidirectional DC/DC left half-bridge circuit, a bidirectional DC/DC right half-bridge circuit, and a bidirectional DC/DC H-bridge circuit. When the battery pack needs to be heated, the sampling control unit may be configured to: based on battery parameters of the battery pack and a voltage and a current limit value of the DC/DC conversion unit, control, in each of at least one consecutive first cycle, the battery pack to discharge to the energy storage unit by using the DC/DC conversion unit; control, in each of at least one consecutive second cycle, the energy storage unit to charge the battery pack by using the DC/DC conversion unit; and control, in the at least one consecutive first cycle and the at least one consecutive second cycle, an average charge/discharge current value of the battery pack to be less than or equal to a charge/discharge current limit value. Duration of the first cycle, a quantity of first cycles, duration of the second cycle, and a quantity of second cycles are determined by the battery parameters and the voltage and the current limit value of the DC/DC conversion unit, and the charge/discharge current limit value may be determined by the battery parameters (for example, a battery voltage and a battery temperature). Herein, the at least one consecutive first cycle may be earlier or later than the at least one consecutive second cycle. This may be specifically determined based on an actual application scenario, and is not limited herein.

It may be understood that the average charge/discharge current value may indicate a difference between discharge energy of the battery pack in the at least one consecutive first cycle and charge energy of the battery pack in the at least one consecutive second cycle. The charge/discharge current limit value may include a charge current limit value (that is, a maximum charge current) or a discharge current limit value (that is, a maximum discharge current). When the average charge/discharge current value is equal to 0 (that is, the charge/discharge current limit value is 0, and the discharge energy is equal to the charge energy), the battery pack can be heated (that is, the battery pack is in a heating state). When the average charge/discharge current value is less than or equal to the charge current limit value (that is, the discharge energy is less than the charge energy), the battery pack can be charged while the battery pack is heated (that is, the battery pack is in a heating and charging state). When the average charge/discharge current value is less than or equal to the discharge current limit value (that is, the discharge energy is greater than the charge energy), discharging of the battery pack can be controlled while the battery pack is heated (that is, the battery pack is in a heating and discharging state).

In this application, the battery pack can be fast charged and discharged in the at least one consecutive first cycle and the at least one consecutive second cycle, to perform pulse heating on the battery pack. This avoids a lithium precipitation phenomenon, and reduces a risk of a battery short circuit. The battery pack is self-heated from inside to outside by using a Joule thermal effect of the battery pack, to uniformly heat the battery pack. In this way, heating efficiency is improved, a system structure is simple, and costs are low. Second, the battery pack can be charged while the battery pack is heated, or discharging of the battery pack is controlled while the battery pack is heated, to improve a charging rate and a power backup capability of the battery pack in a low-temperature environment. Finally, when the battery pack is in a safe state (that is, the average charge/discharge current value is less than or equal to the charge/discharge current limit value), the battery pack can be fast charged and discharged to the maximum extent, to ensure energy maximization, higher energy utilization, higher safety, and high applicability.

Optionally, assuming that both the quantity of first cycles and the quantity of second cycles are greater than or equal to 2, when the battery pack needs to be heated, the sampling control unit may be configured to: based on the battery parameters of the battery pack and the voltage and the current limit value of the DC/DC conversion unit, control, in each of the at least two consecutive first cycles, the battery pack to discharge to the energy storage unit by using the DC/DC conversion unit; control, in each of the at least two consecutive second cycles, the energy storage unit to charge the battery pack by using the DC/DC conversion unit; and control, in the at least two consecutive first cycles and the at least two consecutive second cycles, the average charge/discharge current value of the battery pack to be less than or equal to the charge/discharge current limit value. It may be understood that, when both the quantity of first cycles and the quantity of second cycles are greater than or equal to 2, a heating speed of the battery pack may be further improved while the battery pack is uniformly heated, and heating efficiency is higher.

With reference to the first aspect, in a first possible implementation, the battery parameters of the battery pack include but are not limited to the battery voltage and the battery temperature. The battery system further includes a temperature detector and a voltage detector. The temperature detector and the voltage detector may separately communicate with the sampling control unit to transmit temperature data (for example, the battery temperature) and voltage data (for example, the battery voltage). Optionally, the temperature detector and the voltage detector may be integrated into the sampling control unit, and specific locations of the temperature detector and the voltage detector may be determined based on an actual application scenario. The temperature detector may be configured to collect the battery temperature of the battery pack, and the voltage detector may be configured to collect the battery voltage of the battery pack. Further, the sampling control unit may be configured to: obtain a first charge/discharge current limit value of the battery pack based on the battery voltage; obtain a second charge/discharge current limit value of the battery pack based on the battery temperature; and obtain the charge/discharge current limit value based on the smaller one of the first charge/discharge current limit value and the second charge/discharge current limit value. The first charge/discharge current limit value includes a first charge current limit value or a first discharge current limit value, the second charge/discharge current limit value includes a second charge current limit value or a second discharge current limit value, and the charge/discharge current limit value includes the charge current limit value or the discharge current limit value. The sampling control unit may be configured to use the smaller one of the first charge current limit value and the second charge current limit value as the charge current limit value, or use the smaller one of the first discharge current limit value and the second discharge current limit value as the discharge current limit value. In the battery system provided in this application, the charge/discharge current limit value of the battery pack may be indirectly determined based on the battery voltage and the battery temperature, so that when the battery pack is in a safe state (that is, the average charge/discharge current value is less than or equal to the charge/discharge current limit value), the battery pack can be fast charged and discharged to the maximum extent, to ensure energy maximization, higher energy utilization, higher safety, and higher applicability.

With reference to the first aspect or the first possible implementation of the first aspect, in a second possible implementation, when the DC/DC conversion unit includes at least one DC/DC conversion circuit, and DC/DC conversion circuits are connected in parallel and then connected to the battery pack, the sampling control unit may be configured to obtain a switching duty cycle and a switching frequency of each of a plurality of switches in each DC/DC conversion circuit based on the battery parameters and the voltage and the current limit value that are of the DC/DC conversion unit. Further, the sampling control unit is further configured to: based on the switching duty cycle and the switching frequency of each switch in each DC/DC conversion circuit, control, in each first cycle, the battery pack to discharge to the energy storage unit by using the DC/DC conversion circuit; control, in each second cycle, the energy storage unit to charge the battery pack by using the DC/DC conversion circuit; and control, in the at least one consecutive first cycle and the at least one consecutive second cycle, the average charge/discharge current value of the battery pack to be less than or equal to the charge/discharge current limit value. In the battery system provided in this application, turn-on or turn-off of each switch in each DC/DC conversion circuit may be controlled by using the switching duty cycle and the switching frequency of each switch, to fast charge and discharge the battery pack in the at least one consecutive first cycle and the at least one consecutive second cycle through superimposition of pulse currents (that is, a charge current and a discharge current), improve heating efficiency and a heating speed of the battery pack and a charging rate and a power backup capability of the battery pack in a low-temperature environment, and ensure energy maximization, higher safety, and higher applicability.

With reference to the second possible implementation of the first aspect, in a third possible implementation, when the circuit topology of the DC/DC conversion circuit is the bidirectional DC/DC left half-bridge circuit, the DC/DC conversion circuit includes a first switch, a second switch, and a first inductor; the energy storage unit includes a capacitor; the first switch and the second switch may be connected in series and then connected in parallel to the battery pack; and a series connection end of the first switch and the second switch may be connected to one end of the capacitor by using the first inductor; and a parallel connection end of the second switch and the battery pack is connected to the other end of the capacitor. Herein, the first switch and the second switch are alternately turned on. To be specific, when the first switch is turned on, the second switch is turned off, or when the first switch is turned off, the second switch is turned on. A wave-emitting mode of each switch may be a triangular wave. The wave-emitting mode of each switch may further include but is not limited to a square wave, a trapezoidal wave, a sine wave, or a combination of the foregoing waveforms. Optionally, the energy storage unit further includes an external power supply, and the external power supply and the capacitor are connected in parallel. This may be specifically determined based on an actual application scenario, and is not limited herein. It may be understood that the sampling control unit may control turn-on or turn-off of each switch in each DC/DC conversion circuit based on the switching duty cycle and the switching frequency of each of the first switch and the second switch in the DC/DC conversion circuit, to fast charge and discharge the battery pack in the at least one consecutive first cycle and the at least one consecutive second cycle. In this way, heating efficiency and a heating speed of the battery pack are improved, and energy utilization is high.

With reference to the third possible implementation of the first aspect, in a fourth possible implementation, the first cycle includes a first discharging time period and a second discharging time period later than the first discharging time period. In a process of discharging the battery pack, the sampling control unit may be configured to: based on the switching duty cycle and the switching frequency of each switch, control, in the first discharging time period, the second switch to be turned off and the first switch to be turned on, and control, in the second discharging time period, the first switch to be turned off and the second switch to be turned on, to fast discharge the battery pack. It may be understood that, in the process of discharging the battery pack, for specific control manners of the first switch and the second switch in each DC/DC conversion circuit, refer to the foregoing descriptions, to control the battery pack to fast discharge to the energy storage unit by using the DC/DC conversion circuit in each consecutive first cycle.

With reference to the third possible implementation of the first aspect, in a fifth possible implementation, the second cycle includes a first charging time period and a second charging time period later than the first charging time period. In a process of charging the battery pack, the sampling control unit may be configured to: based on the switching duty cycle and the switching frequency of each switch, control, in the first charging time period, the first switch to be turned off and the second switch to be turned on, and control, in the second charging time period, the second switch to be turned off and the first switch to be turned on, to fast charge the battery pack. It may be understood that, in the process of charging the battery pack, for specific control manners of the first switch and the second switch in each DC/DC conversion circuit, refer to the foregoing descriptions, to control the energy storage unit to fast charge the battery pack by using the DC/DC conversion circuit in each consecutive second cycle.

With reference to the second possible implementation of the first aspect, in a sixth possible implementation, when the circuit topology of the DC/DC conversion circuit is the bidirectional DC/DC right half-bridge circuit, the DC/DC conversion circuit includes a third switch, a fourth switch, and a second inductor; the energy storage unit includes a capacitor; the third switch and the fourth switch are connected in series and then connected in parallel to the capacitor; one end of the battery pack may be connected to a series connection point of the third switch and the fourth switch by using the second inductor; and the other end of the battery pack may be connected to a parallel connection end of the fourth switch and the capacitor. Herein, the third switch and the fourth switch are alternately turned on. To be specific, when the third switch is turned on, the fourth switch is turned off, or when the third switch is turned off, the fourth switch is turned on. A wave-emitting mode of each switch may be a triangular wave. The wave-emitting mode of each switch may further include but is not limited to a square wave, a trapezoidal wave, a sine wave, or a combination of the foregoing waveforms. It may be understood that the sampling control unit may control turn-on or turn-off of each switch in each DC/DC conversion circuit based on the switching duty cycle and the switching frequency of each of the third switch and the fourth switch in the DC/DC conversion circuit, to fast charge and discharge the battery pack in the at least one consecutive first cycle and the at least one consecutive second cycle. In this way, heating efficiency and a heating speed of the battery pack are improved, and energy utilization is high.

With reference to the sixth possible implementation of the first aspect, in a seventh possible implementation, the first cycle includes a first discharging time period and a second discharging time period later than the first discharging time period. In a process of discharging the battery pack, the sampling control unit may be configured to: based on the switching duty cycle and the switching frequency of each switch, control, in the first discharging time period, the third switch to be turned off and the fourth switch to be turned on, and control, in the second discharging time period, the fourth switch to be turned off and the third switch to be turned on, to fast discharge the battery pack. It may be understood that, in the process of discharging the battery pack, for specific control manners of the third switch and the fourth switch in each DC/DC conversion circuit, refer to the foregoing descriptions, to control the battery pack to fast discharge to the energy storage unit by using the DC/DC conversion circuit in each consecutive first cycle.

With reference to the sixth possible implementation of the first aspect, in an eighth possible implementation, the second cycle includes a first charging time period and a second charging time period later than the first charging time period. In a process of charging the battery pack, the sampling control unit may be configured to: based on the switching duty cycle and the switching frequency of each switch, control, in the first charging time period, the fourth switch to be turned off and the third switch to be turned on, and control, in the second charging time period, the third switch to be turned off and the fourth switch to be turned on, to fast charge the battery pack. It may be understood that, in the process of charging the battery pack, for specific control manners of the third switch and the fourth switch in each DC/DC conversion circuit, refer to the foregoing descriptions, to control the energy storage unit to fast charge the battery pack by using the DC/DC conversion circuit in each consecutive second cycle.

With reference to the second possible implementation of the first aspect, in a ninth possible implementation, when the circuit topology of the DC/DC conversion circuit is the bidirectional DC/DC H-bridge circuit, the DC/DC conversion circuit includes a fifth switch, a sixth switch, a seventh switch, an eighth switch, and a third inductor; the energy storage unit includes a capacitor; the fifth switch and the sixth switch may be connected in series and then connected in parallel to the battery pack; the seventh switch and the eighth switch may be connected in series and then connected in parallel to the capacitor; and a series connection point of the fifth switch and the sixth switch may be connected to a series connection point of the seventh switch and the eighth switch by using the third inductor. Herein, the fifth switch and the sixth switch are alternately turned on. To be specific, when the fifth switch is turned on, the sixth switch is turned off, or when the fifth switch is turned off, the sixth switch is turned on. Herein, the seventh switch and the eighth switch are alternately turned on. To be specific, when the seventh switch is turned on, the eighth switch is turned off, or when the seventh switch is turned off, the eighth switch is turned on. A wave-emitting mode of each switch may be an irregular trapezoidal wave. The wave-emitting mode of each switch may further include but is not limited to a square wave, a triangular wave, a trapezoidal wave, a sine wave, or a combination of the foregoing waveforms. It may be understood that the sampling control unit may control turn-on or turn-off of each switch in each DC/DC conversion circuit based on the switching duty cycle and the switching frequency of each of the fifth switch, the sixth switch, the seventh switch, and the eighth switch in the DC/DC conversion circuit, to fast charge and discharge the battery pack in the at least one consecutive first cycle and the at least one consecutive second cycle. In this way, heating efficiency and a heating speed of the battery pack are improved, and energy utilization is high.

With reference to the ninth possible implementation of the first aspect, in a tenth possible implementation, the first cycle includes a first discharging time period, a second discharging time period, and a third discharging time period, the first discharging time period is earlier than the second discharging time period, and the second discharging time period is earlier than the third discharging time period. In a process of discharging the battery pack, the sampling control unit may be configured to: based on the switching duty cycle and the switching frequency of each switch, control, in the first discharging time period, the sixth switch and the seventh switch to be turned off and the fifth switch and the eighth switch to be turned on; control, in the second discharging time period, the sixth switch and the eighth switch to be turned off and the fifth switch and the seventh switch to be turned on; and control, in the third discharging time period, the fifth switch and the eighth switch to be turned off and the sixth switch and the seventh switch to be turned on, to fast discharge the battery pack. It may be understood that, in the process of discharging the battery pack, for specific control manners of the fifth switch to the eighth switch in each DC/DC conversion circuit, refer to the foregoing descriptions, to control the battery pack to fast discharge to the energy storage unit by using the DC/DC conversion circuit in each consecutive first cycle.

With reference to the ninth possible implementation of the first aspect, in an eleventh possible implementation, the second cycle includes a first charging time period, a second charging time period, and a third charging time period, the first charging time period is earlier than the second charging time period, and the second charging time period is earlier than the third charging time period. In a process of charging the battery pack, the sampling control unit may be configured to: based on the switching duty cycle and the switching frequency of each switch, control, in the first charging time period, the fifth switch and the eighth switch to be turned off and the sixth switch and the seventh switch to be turned on; control, in the second charging time period, the sixth switch and the eighth switch to be turned off and the fifth switch and the seventh switch to be turned on; and control, in the third charging time period, the sixth switch and the seventh switch to be turned off and the fifth switch and the eighth switch to be turned on, to fast charge the battery pack. It may be understood that, in the process of charging the battery pack, for specific control manners of the fifth switch to the eighth switch in each DC/DC conversion circuit, refer to the foregoing descriptions, to control the energy storage unit to fast charge the battery pack by using the DC/DC conversion circuit in each consecutive second cycle.

According to a second aspect, this application provides a power supply system. The power supply system includes a DC/DC conversion module and at least one battery system provided in any one of the first aspect to the eleventh possible implementation of the first aspect. Battery systems may be connected in parallel and then connected to the DC/DC conversion module. In this application, the battery system can still work normally in a low-temperature environment. In this way, power supply efficiency of the system is improved, and applicability is high.

With reference to the second aspect, in a first possible implementation, the power supply system further includes a power supply module and a power conversion module connected to the power supply module.

With reference to the first possible implementation of the second aspect, in a second possible implementation, in an application scenario of photovoltaic energy storage based hybrid power supply, the power supply module includes a photovoltaic array, and the power conversion module may be a DC/DC conversion module.

With reference to the first possible implementation of the second aspect, in a third possible implementation, in an application scenario of wind energy storage based hybrid power supply, the power supply module includes a generator, and the power conversion module may be an alternating current (alternating current, AC)/DC conversion module.

With reference to any one of the first possible implementation of the second aspect to the third possible implementation of the second aspect, in a fourth possible implementation, the power supply system further includes a direct current bus and a DC/AC conversion module, the DC/DC conversion module and the power conversion module may be separately connected to an input end of the DC/AC conversion module through the direct current bus, and an output end of the DC/AC conversion module may be connected to an alternating current load or an alternating current power grid. Optionally, the power supply system may further include an on-grid/off-grid connection box, and the output end of the DC/AC conversion module may be connected to the alternating current load or the alternating current power grid by using the on-grid/off-grid connection box. A specific connection manner between functional modules in the power supply system provided in this application may be determined based on an actual application scenario. This is not limited herein.

In this application, the battery pack can be fast charged and discharged in the at least one consecutive first cycle and the at least one consecutive second cycle, to perform pulse heating on the battery pack. This avoids a lithium precipitation phenomenon, and reduces a risk of a battery short circuit. The battery pack is self-heated from inside to outside by using a Joule thermal effect of the battery pack, to uniformly heat the battery pack. In this way, heating efficiency is improved, a heating speed is higher, a system structure is simple, costs are low, and applicability is high.

### BRIEF DESCRIPTION OF DRAWINGS

FIG. 1 is a schematic diagram of an application scenario of a battery system according to this application;
FIG. 2 is a schematic structural diagram of a battery system according to this application;
FIG. 3 is another schematic structural diagram of a battery system according to this application;
FIG. 4 is another schematic structural diagram of a battery system according to this application;
FIG. 5 is a schematic diagram of a discharge current flow direction of a battery system according to this application;
FIG. 6 is a schematic diagram of a charge current flow direction of a battery system according to this application;
FIG. 7 is a schematic diagram of an inductor current waveform of a battery system according to this application;
FIG. 8 is a schematic diagram of another inductor current waveform of a battery system according to this application;
FIG. 9 is another schematic structural diagram of a battery system according to this application;
FIG. 10 is a schematic diagram of another charge current flow direction of a battery system according to this application;
FIG. 11 is a schematic diagram of another discharge current flow direction of a battery system according to this application;
FIG. 12 is still another schematic structural diagram of a battery system according to this application;
FIG. 13 is a schematic diagram of still another discharge current flow direction of a battery system according to this application;
FIG. 14 is a schematic diagram of still another charge current flow direction of a battery system according to this application;
FIG. 15 is a schematic diagram of another inductor current waveform of a battery system according to this application;
FIG. 16 is a schematic diagram of another inductor current waveform of a battery system according to this application;
FIG. 17 is a schematic structural diagram of a power supply system according to this application;
FIG. 18 is another schematic structural diagram of a power supply system according to this application; and
FIG. 19 is still another schematic structural diagram of a power supply system according to this application.

### DESCRIPTION OF EMBODIMENTS

A battery system provided in this application is applicable to a plurality of application fields such as the new energy intelligent microgrid field, the power transmission and distribution field, the new energy field (for example, the photovoltaic on-grid field or the wind on-grid field), the photovoltaic energy storage and power generation field (for example, power supply to an electric device (for example, a refrigerator or an air conditioner) or a power grid), the wind energy storage and power generation field, or the high-power converter field (for example, converting a direct current into a high-power high-voltage alternating current). This may be specifically determined based on an actual application scenario, and is not limited herein. The battery system provided in this application may be adapted to different application scenarios, for example, an application scenario of photovoltaic energy storage and power supply, an application scenario of wind energy storage and power supply, an application scenario of energy storage and power supply, or another application scenario. The following uses the application scenario of energy storage and power supply as an example for description, and details are not described below again.

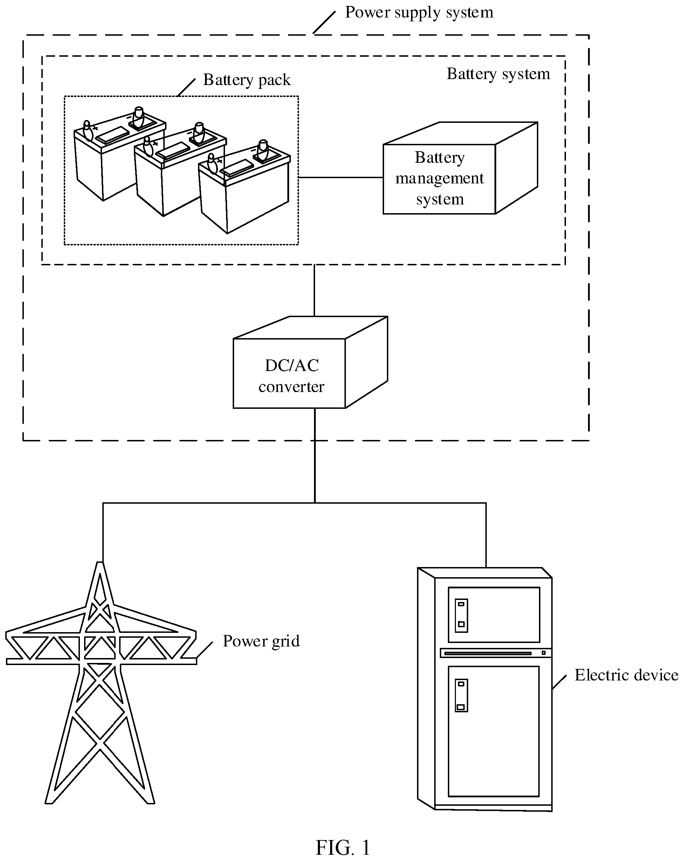

FIG. 1 is a schematic diagram of an application scenario of a battery system according to this application. In an application scenario of energy storage and power supply, as shown in FIG. 1, the power supply system includes a battery system and a DC/AC converter. The battery system includes a battery pack and a battery management system. The battery pack may be connected to the DC/AC converter by using the battery management system. In a process in which the power supply system supplies power to a load, the battery management system may convert a direct current voltage provided by the battery pack into a target direct current voltage, and output the target direct current voltage to the DC/AC converter. In this case, the DC/AC converter may convert the target direct current voltage input by the battery management system into an alternating current voltage, and supply power to a power grid and an electric device based on the alternating current voltage. In the application scenario shown in FIG. 1, when the battery system is in a low-temperature environment, because a discharge capacity of the battery pack is reduced due to an excessively low temperature, a lithium dendrite is formed on a diaphragm of the battery pack when the battery pack is charged, and consequently, thermal runaway of the battery pack is caused, and the power supply system cannot work normally. Therefore, charging and discharging of the battery pack in the low-temperature environment are particularly important. In this case, the battery management system may fast charge and discharge the battery pack by using an internal circuit, to heat the battery pack to enable the battery pack to work normally, so as to avoid thermal runaway of the battery pack, improve heating efficiency of the battery pack, further improve power supply efficiency of the power supply system, and improve applicability.

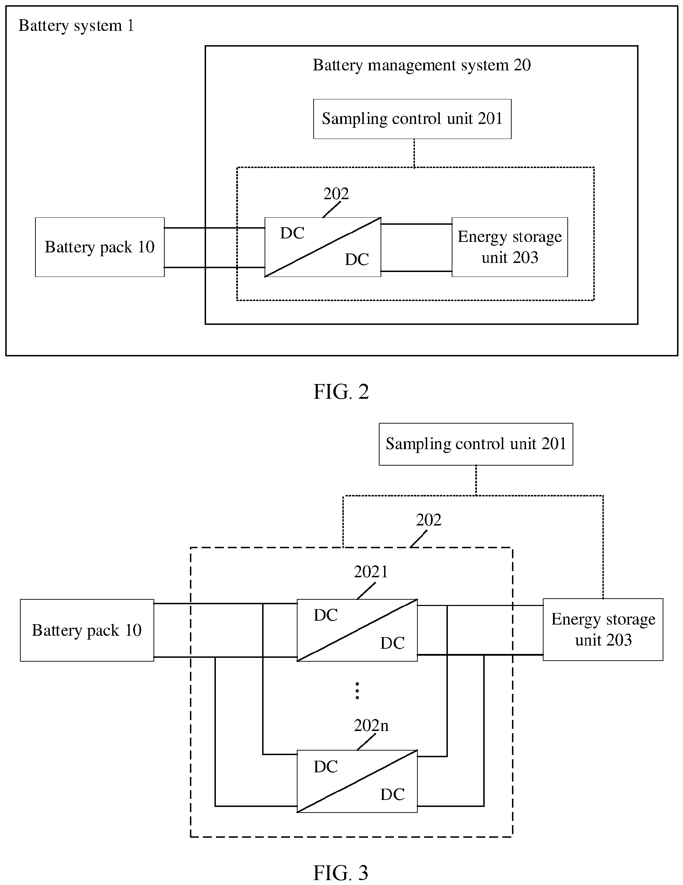

The following describes, with reference to FIG. 2 to FIG. 19, a battery system, a power supply system, and working principles of the battery system and the power supply system provided in this application by using examples.

FIG. 2 is a schematic structural diagram of a battery system according to this application. As shown in FIG. 2, the battery system 1 includes a battery pack 10 (which may also be referred to as an electrochemical cell pack) and a battery management system 20. The battery management system 20 may be connected to the battery pack 10 to perform charging and discharging control on the battery pack 10. The battery pack 10 may include but is not limited to a plurality of secondary batteries such as a lithium-ion battery and a sodium-ion battery. The battery pack 10 and the battery management system 20 herein may form a battery module, and may be applied to a plurality of battery use fields such as the communication field (for example, a communication and energy storage battery) and the electric vehicle field (for example, a power battery). The battery management system 20 may include a sampling control unit 201, a DC/DC conversion unit 202, and an energy storage unit 203. The DC/DC conversion unit 202 and the energy storage unit 203 may be connected in parallel. The battery management system 20 herein may be a board integrated with the sampling control unit 201, the DC/DC conversion unit 202, and the energy storage unit 203. In this application, one or more functional modules that are in the battery management system and that are configured to collect data and control the DC/DC conversion unit may be collectively referred to as a sampling control unit, for example, a controller (micro controller unit, MCU for short). The sampling control unit 201 may collect a battery temperature of the battery pack 10 in real time by using a temperature monitor, and when the battery temperature is greater than a preset temperature threshold, determine that the battery pack 10 does not need to be heated. The preset temperature threshold herein may be a battery temperature that is preset when the battery pack needs to be heated, heated and charged, or heated and discharged. The preset temperature threshold may be determined by an electrochemical cell material of the battery pack 10 and a state (for example, a charging/discharging state or an offline state) of the battery pack 10. In this case, the sampling control unit 201 may control switching transistors in the DC/DC conversion unit 202 to be synchronously turned off, or reduce a negative current in the DC/DC conversion unit 202, or increase a switching frequency of a switch in the DC/DC conversion unit 202, so that a switching loss in a charging/discharging condition can be reduced, and applicability is higher. On the contrary, when detecting that the battery temperature of the battery pack 10 is less than the preset temperature threshold, the sampling control unit 201 determines that the battery pack 10 needs to be heated.

In some feasible implementations, when the battery pack 10 needs to be heated, based on battery parameters of the battery pack 10 and a voltage and a current limit value (that is, a hardware parameter) of the DC/DC conversion unit 202, the sampling control unit 201 may control, in each of at least one consecutive first cycle, the battery pack 10 to discharge to the energy storage unit 203 by using the DC/DC conversion unit 202; control, in each of at least one consecutive second cycle, the energy storage unit 203 to charge the battery pack 10 by using the DC/DC conversion unit 202; and control, in the at least one consecutive first cycle and the at least one consecutive second cycle, an average charge/discharge current value (which may also be referred to as a valid value of an alternating current pulse current) of the battery pack 10 to be less than or equal to a charge/discharge current limit value of the battery pack 10. In this way, the battery pack 10 is fast charged or discharged to heat the battery pack 10. Herein, the at least one consecutive first cycle may be earlier or later than the at least one consecutive second cycle. This may be specifically determined based on an actual application scenario, and is not limited herein. Duration of the first cycle, a quantity of first cycles, duration of the second cycle, and a quantity of second cycles may be determined by the battery parameters and the voltage and the current limit value of the DC/DC conversion unit 202. The current limit value herein may be understood as a maximum current that can be borne by the DC/DC conversion unit 202. The maximum current is a limit value of a current that can be borne by the DC/DC conversion unit 202 in a safe state without affecting the DC/DC conversion unit 202, and may be determined by a specific circuit topology of the DC/DC conversion unit 202. The battery parameters may include but are not limited to a battery voltage, a battery temperature, and a current required for heating the battery pack 10 (that is, a heating requirement capability of the battery pack 10). A difference between a battery voltage and the voltage of the DC/DC conversion unit 202, an inductance amount corresponding to an inductor in the DC/DC conversion unit 202, and another parameter may also determine the quantity of first cycles, the duration of the first cycle, the quantity of second cycles, and the duration of the second cycle.

It may be understood that the sampling control unit 201 may fast charge and discharge the battery pack 10 in the at least one consecutive first cycle and the at least one consecutive second cycle, to perform pulse heating on the battery pack 10. This avoids a lithium precipitation phenomenon, and reduces a risk of a battery short circuit. The battery pack 10 is self-heated from inside to outside by using a Joule thermal effect of the battery pack 10, to uniformly heat the battery pack 10. In this way, heating efficiency is improved, a heating speed is higher, a system structure is simple, and costs are lower. In addition, when the battery pack 10 is in a safe state (that is, the average charge/discharge current value is less than or equal to the charge/discharge current limit value), the sampling control unit 201 may fast charge and discharge the battery pack 10 to the maximum extent, to ensure energy maximization, higher energy utilization, higher safety, and higher applicability.

In some feasible implementations, the average charge/discharge current value may indicate a difference between discharge energy of the battery pack 10 in the at least one consecutive first cycle and charge energy of the battery pack 10 in the at least one consecutive second cycle. The charge/discharge current limit value of the battery pack 10 may be determined by the battery parameters (for example, the battery temperature and the battery voltage) of the battery pack 10, and the charge/discharge current limit value may include a charge current limit value (that is, a maximum charge current) or a discharge current limit value (that is, a maximum discharge current). When the battery pack 10 needs to be heated, the sampling control unit 201 may control, based on the battery parameters of the battery pack 10 and the voltage and the current limit value of the DC/DC conversion unit 202, the average charge/discharge current value to be equal to 0 (that is, the charge/discharge current limit value is 0, and the discharge energy is equal to the charge energy), to heat the battery pack 10 (that is, the battery pack 10 is in a heating state). When the battery system 1 is connected to a power supply and the battery pack 10 needs to be heated, the sampling control unit 201 may control, based on the battery parameters of the battery pack 10 and the voltage and the current limit value of the DC/DC conversion unit 202, the average charge/discharge current value to be less than or equal to the charge current limit value (that is, the discharge energy is less than the charge energy), so that the battery pack 10 can be charged while the battery pack 10 is heated (that is, the battery pack 10 is in a heating and charging state). When the battery system 1 is connected to a load and the battery pack 10 needs to be heated, the sampling control unit 201 may control, based on the battery parameters of the battery pack 10 and the voltage and the current limit value of the DC/DC conversion unit 202, the average charge/discharge current value to be less than or equal to the discharge current limit value (that is, the discharge energy is greater than the charge energy), so that the battery pack 10 can be controlled to discharge while the battery pack 10 is heated (that is, the battery pack 10 is in a heating and discharging state).

It may be understood that the sampling control unit 201 may heat the battery pack 10, charge the battery pack 10 while heating the battery pack 10, or control discharging of the battery pack 10 when heating the battery pack 10, to improve a charging rate and a power backup capability of the battery pack in a low-temperature environment, and reduce system application costs. In addition, when the battery pack 10 is in a safe state, the battery pack 10 can be fast charged and discharged to the maximum extent, to ensure energy maximization, higher energy utilization, higher safety, and high applicability.

Optionally, in some feasible implementations, assuming that both a quantity of first cycles and a quantity of second cycles are greater than or equal to 2, when the battery pack 10 needs to be heated, based on the battery parameters of the battery pack 10 and the voltage and the current limit value (that is, the hardware parameter) of the DC/DC conversion unit 202, the sampling control unit 201 may control, in each of the at least two consecutive first cycles, the battery pack 10 to discharge to the energy storage unit 203 by using the DC/DC conversion unit 202; control, in each of the at least two consecutive second cycles, the energy storage unit 203 to charge the battery pack 10 by using the DC/DC conversion unit 202; and control, in the at least two consecutive first cycles and the at least two consecutive second cycles, the average charge/discharge current value of the battery pack 10 to be less than or equal to the charge/discharge current limit value. It may be understood that the sampling control unit 201 may fast charge and discharge the battery pack 10 in the at least two consecutive first cycles and the at least two consecutive second cycles, so that a heating speed of the battery pack 10 is further improved while the battery pack 10 is uniformly heated, and heating efficiency is higher. In addition, the average charge/discharge current value of the battery pack 10 may be controlled to be less than or equal to the charge/discharge current limit value, to ensure energy maximization, higher energy utilization, and higher safety.

In some feasible implementations, the battery parameters of the battery pack 10 may include the battery voltage and the battery temperature. The battery system 1 may further include a temperature detector (not shown) and a voltage detector (not shown). The temperature detector and the voltage detector may separately communicate with the sampling control unit 201 to transmit temperature data (for example, the battery temperature) and voltage data (for example, the battery voltage). Optionally, the temperature detector and the voltage detector may be directly integrated into the sampling control unit 201, and specific locations of the temperature detector and the voltage detector may be determined based on an actual application scenario. The temperature detector may collect the battery temperature of the battery pack 10 in real time, and the voltage detector may collect the battery voltage of the battery pack 10 in real time. After collecting the battery temperature and the battery voltage, the sampling control unit 201 may obtain a first charge/discharge current limit value of the battery pack 10 based on the battery voltage; obtain a second charge/discharge current limit value of the battery pack 10 based on the battery temperature; and obtain the charge/discharge current limit value of the battery pack 10 based on the smaller one of the first charge/discharge current limit value and the second charge/discharge current limit value. Optionally, because electrochemical cell material ratios of different types of battery packs 10 are different, a case in which the battery parameters do not include the battery voltage may exist. In this case, the sampling control unit 201 may collect the battery temperature of the battery pack 10 in real time by using the temperature detector, obtain the first charge/discharge current limit value of the battery pack 10 based on the battery temperature, and use the first charge/discharge current limit value as the charge/discharge current limit value of the battery pack 10.

For example, the sampling control unit 201 may obtain the first charge/discharge current limit value from a prestored database based on the battery voltage, obtain the second charge/discharge current limit value from the prestored database based on the battery temperature, and use the smaller one of (that is, a smaller charge/discharge current limit value) of the two as the charge/discharge current limit value of the battery pack 10. The prestored database herein stores a correspondence between a battery voltage and a first charge/discharge current limit value and a correspondence between a battery temperature and a second charge/discharge current limit value. The first charge/discharge current limit value may include a first charge current limit value or a first discharge current limit value, the second charge/discharge current limit value may include a second charge current limit value or a second discharge current limit value, and the charge/discharge current limit value includes the charge current limit value or the discharge current limit value. The sampling control unit 201 may use the smaller one of the first charge current limit value and the second charge current limit value as the charge current limit value, or use the smaller one of the first discharge current limit value and the second discharge current limit value as the discharge current limit value. It may be understood that the sampling control unit 201 may indirectly determine the charge/discharge current limit value (for example, the charge current limit value or the discharge current limit value) of the battery pack 10 based on the battery voltage and the battery temperature, so that the battery pack 10 can be fast charged and discharged to the maximum extent when the battery pack 10 is in a safe state, to ensure energy maximization, higher energy utilization, higher safety, and higher applicability.

In some feasible implementations, the DC/DC conversion unit 202 may include at least one DC/DC conversion circuit (that is, one or more DC/DC conversion circuits). FIG. 3 is another schematic structural diagram of a battery system according to this application. As shown in FIG. 3, the DC/DC conversion unit 202 shown in FIG. 2 includes a DC/DC conversion circuit 2021 to a DC/DC conversion circuit 202n, first input/output ends of the DC/DC conversion circuit 2021 to the DC/DC conversion circuit 202n are connected in parallel and then connected to the battery pack 10, and second input/output ends of the DC/DC conversion circuit 2021 to the DC/DC conversion circuit 202n are connected in parallel and then connected to the energy storage unit 203. Optionally, the DC/DC conversion unit 202 may further include a switching circuit, an AD/DC conversion circuit, and a corresponding auxiliary drive circuit. This may be specifically determined based on an actual application scenario, and is not limited herein. In a process of discharging the battery pack 10, the first input/output ends of the DC/DC conversion circuit 2021 to the DC/DC conversion circuit 202n may be used as input ends, and the second input/output ends may be used as output ends. In a process of charging the battery pack 10, the first input/output ends of the DC/DC conversion circuit 2021 to the DC/DC conversion circuit 202n may be used as output ends, and the second input/output ends may be used as input ends. A circuit topology of the DC/DC conversion circuit 2021 to the DC/DC conversion circuit 202n herein may include but is not limited to a bidirectional DC/DC left half-bridge circuit, a bidirectional DC/DC right half-bridge circuit, a bidirectional DC/DC H-bridge circuit, or a combination of the foregoing circuit topologies. This may be specifically determined based on an actual application scenario, and is not limited herein.

In some feasible implementations, when the battery pack 10 needs to be heated, the sampling control unit 201 may obtain, based on the battery parameters and the voltage and the current limit value that are of the DC/DC conversion unit 202, a switching duty cycle and a switching frequency of each of a plurality of switches in each of the DC/DC conversion circuit 2021 to the DC/DC conversion circuit 202n. The switching frequency may be understood as a pulse width modulation (pulse width modulation, PWM) carrier frequency. The plurality of switches herein may include but are not limited to an insulated gate bipolar transistor (insulated gate bipolar transistor, IGBT for short) or a metal-oxide semiconductor field-effect transistor (metal-oxide-semiconductor field-effect transistor, MOSFET for short). Optionally, the sampling control unit 201 may also obtain a wave-emitting mode of and a wave-emitting coefficient of each switch based on the battery parameters and the voltage and the current limit value that are of the DC/DC conversion unit 202. This may be specifically determined based on an actual application scenario, and is not limited herein. The wave-emitting mode herein may include but is not limited to a square wave, a triangular wave, a trapezoidal wave (or an irregular trapezoidal wave), a sine wave, or a combination of the foregoing waveforms. The wave-emitting coefficient may include duration of a discharge cycle of the battery pack 10, a quantity (which may be represented as N1, where N1 is greater than or equal to 1) of repetitions of the discharge cycle, duration of a charge cycle, and a quantity (which may be represented as N2, where N2 is greater than or equal to 1) of repetitions of the charging cycle.

Further, based on the switching duty cycle and the switching frequency of each switch in each DC/DC conversion circuit, the sampling control unit 201 may control, in each of N1 consecutive first cycles (that is, discharge cycles), the battery pack 10 to discharge to the energy storage unit 203 by using the DC/DC conversion circuit; control, in each of N2 consecutive second cycles (that is, charge cycles), the energy storage unit 203 to charge the battery pack 10 by using the DC/DC conversion circuit; and control, in the N1 consecutive first cycles and the N2 consecutive second cycles, the average charge/discharge current value of the battery pack 10 to be less than or equal to the charge/discharge current limit value of the battery pack 10, so that switching frequencies and phases of the DC/DC conversion circuits can be controlled to be synchronized, and charge currents and discharge currents of the battery pack 10 are synchronously superimposed, to improve heating efficiency and a heating speed. Herein, N1, N2, duration of the first cycle, and duration of the second cycle may be determined by the foregoing wave-emitting coefficient. Optionally, when hardware power of a single DC/DC conversion circuit is insufficient, the DC/DC conversion unit 202 may include at least two DC/DC conversion circuits connected in parallel. In this case, the sampling control unit 201 may control, by using a switching duty cycle and a switching frequency of each switch in the at least two DC/DC conversion circuits connected in parallel, the switch to be turned on or turned off, to fast charge and discharge the battery pack in the at least one consecutive first cycle and the at least one consecutive second cycle through superimposition of pulse currents (that is, a charge current and a discharge current). In this way, the battery pack 10 can be self-heated in a low-temperature environment through closed-loop control on the battery parameters, the voltage and the current limit value of the DC/DC conversion unit 202, and self-heating power, to improve heating efficiency and a heating speed of the battery pack 10.

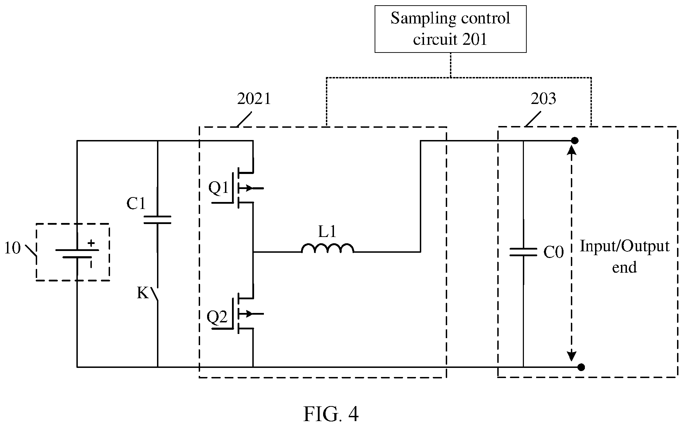

In some feasible implementations, for ease of description, the following uses an example in which the DC/DC conversion unit 202 includes one DC/DC conversion circuit (for example, the DC/DC conversion circuit 2021) for description. Details are not described below. When the circuit topology of the DC/DC conversion circuit 2021 is the bidirectional DC/DC left half-bridge circuit, FIG. 4 is another schematic structural diagram of a battery system according to this application. As shown in FIG. 4, the DC/DC conversion circuit 2021 shown in FIG. 3 includes a first switch Q1, a second switch Q2, and a first inductor L1; the energy storage unit 203 shown in FIG. 3 includes a capacitor C0; the first switch Q1 and the second switch Q2 may be connected in series and then connected in parallel to the battery pack 10; a series connection end of the first switch Q1 and the second switch Q2 may be connected to one end of the capacitor C0 by using the first inductor L1; and a parallel connection end of the second switch Q2 and the battery pack 10 is connected to the other end of the capacitor C0. Herein, the first switch Q1 and the second switch Q2 are alternately turned on. To be specific, when the first switch Q1 is turned on, the second switch Q2 is turned off, or when the first switch Q1 is turned off, the second switch Q2 is turned on. Optionally, the energy storage unit 203 further includes an external power supply (not shown). The two ends of the capacitor C0 may be used as an input/output end to connect to the external power supply. In the process of charging the battery pack 10, an input/output end of the energy storage unit 203 may be used as an input end. In the process of discharging the battery pack 10, an input/output end of the energy storage unit 203 may be used as an output end.

Optionally, in some feasible implementations, as shown in FIG. 4, the battery management system 20 may further include a capacitor C1 and a switch K that are connected in series. When the battery pack 10 needs to be heated, the switch K is turned off. When the battery pack 10 does not need to be heated, the switch K is turned on to supply power to the load. In a process of heating the battery pack 10, the sampling control unit 201 may control, based on a switching duty cycle and a switching frequency of each of the first switch Q1 and the second switch Q2, the switch to be turned on or turned off, to fast charge and discharge the battery pack 10 in the N1 consecutive first cycles and the N2 consecutive second cycles. In addition, in a process of fast charging and discharging the battery pack 10, the average charge/discharge current value of the battery pack 10 may be controlled to be less than or equal to the charge/discharge current limit value, so that the battery pack 10 can be heated, heated and charged, or heated and discharged, to ensure energy maximization, higher energy utilization, and higher safety. A wave-emitting mode of each switch may be a triangular wave. Optionally, the wave-emitting mode of each switch may further include but is not limited to a square wave, a trapezoidal wave, a sine wave, or a combination of the foregoing waveforms. This may be specifically determined based on an actual application scenario, and is not limited herein.

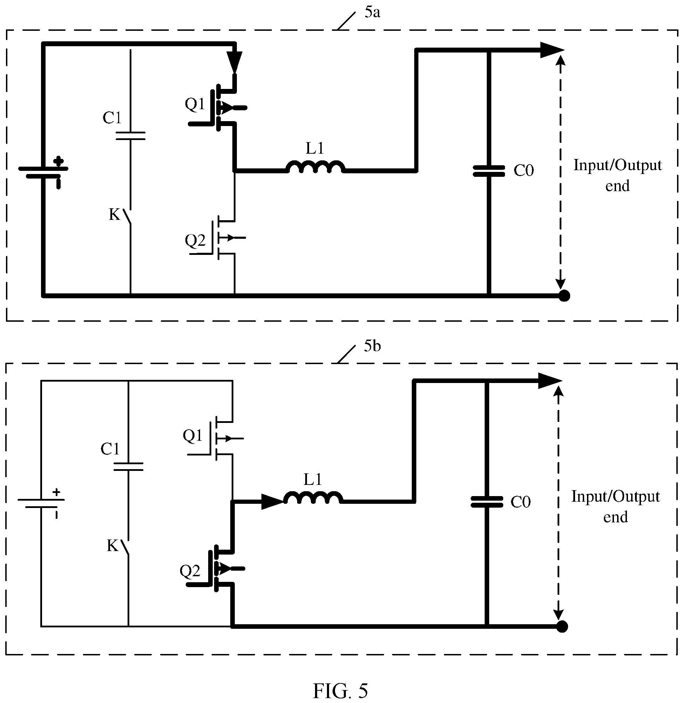

In some feasible implementations, it is assumed that the N1 consecutive first cycles are earlier than the N2 consecutive second cycles. In the process of discharging the battery pack 10, FIG. 5 is a schematic diagram of a discharge current flow direction of a battery system according to this application. When the first cycle includes a first discharging time period and a second discharging time period later than the first discharging time period, as shown in 5a in FIG. 5, based on the switching duty cycle and the switching frequency of each switch, the sampling control unit 201 may control, in a first discharging time period of the 1^{st} first cycle, the second switch Q2 to be turned off and the first switch Q1 to be turned on, so that when the battery pack 10 is bucked (bucked) to discharge to the input/output end, the first inductor L1 stores energy (that is, a current of the first inductor L1 increases) until the current of the first inductor L1 reaches a preset current value or the first discharging time period ends. The preset current value herein may be determined by the battery parameters, the voltage and the current limit value of the DC/DC conversion unit 201, and an inductance amount of the first inductor L1. After the first inductor L1 stores energy, as shown in 5b in FIG. 5, the sampling control unit 201 may control, in a second discharging time period of the 1^{st} first cycle, the first switch Q1 to be turned off and the second switch Q2 to be turned on, so that the capacitor C0 may be charged through freewheeling of the first inductor L1, until the current of the first inductor L1 decreases to 0. In this way, the battery pack 10 can be controlled, in the 1^{st} first cycle, to discharge to the energy storage unit 203 by using the DC/DC conversion circuit 2021. It should be noted that, for a specific implementation in which the sampling control unit 201 controls discharging of the battery pack 10 in the 2^{nd} first cycle to an N1^{th} first cycle, refer to the specific implementation in which the sampling control unit 201 controls discharging of the battery pack 10 in the 1^{st} first cycle. Details are not described below again.

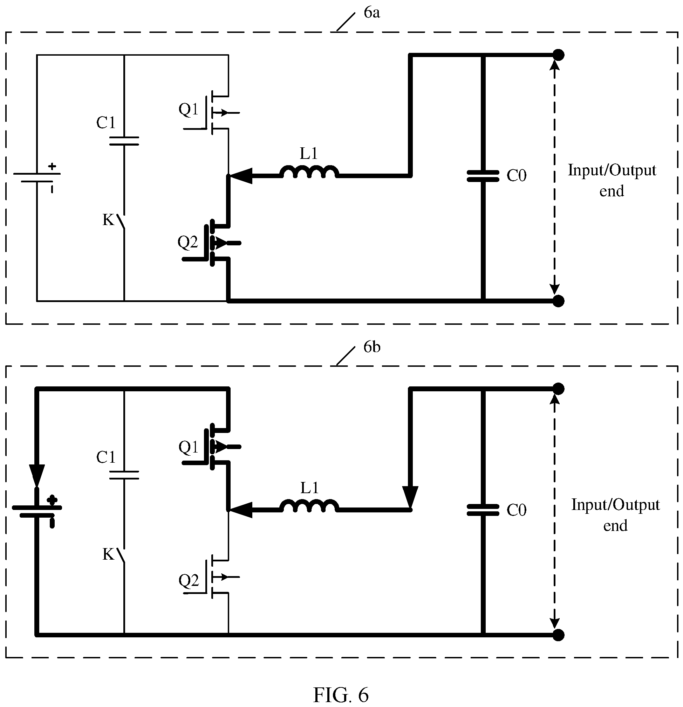

In some feasible implementations, in the process of charging the battery pack 10, FIG. 6 is a schematic diagram of a charge current flow direction of a battery system according to this application. When the second cycle includes a first charging time period and a second charging time period later than the first charging time period, as shown in 6a in FIG. 6, based on the switching duty cycle and the switching frequency of each of the first switch Q1 and the second switch Q2, the sampling control unit 201 may control, in a first charging time period of the 1^{st} second cycle, the first switch Q1 to be turned off and the second switch Q2 to be turned on, so that the energy storage unit 203 performs charging by using the second switch Q2, and the first inductor L1 stores energy (in this case, a current of the first inductor L1 increases in a negative direction), until the current of the first inductor L1 reaches a preset current value or the first charging time period ends. After the first inductor L1 stores energy, as shown in 6b in FIG. 6, based on the switching duty cycle and the switching frequency of each switch, the sampling control unit 201 may control, in a second charging time period of the 1^{st} second cycle, the second switch Q2 to be turned off and the first switch Q1 to be turned on, so that the battery pack 10 is charged through freewheeling of the energy storage unit 203 and the first inductor L1. In this way, the energy storage unit 203 can be controlled, in the 1^{st} second cycle, to charge the battery pack 10 by using the DC/DC conversion circuit 2021. It should be noted that, for a specific implementation in which the sampling control unit 201 controls charging of the battery pack 10 in the 2^{nd} second cycle to an N2^{th} second cycle, refer to the specific implementation in which the sampling control unit 201 controls charging of the battery pack 10 in the 1^{st} second cycle. Details are not described below again.

It can be learned that, the sampling control unit 201 may perform alternate control on the first switch Q1 and the second switch Q2 beyond dead time, so that a switching ripple current flows in and out of the battery pack 10 in the N1 consecutive first cycles and the N2 consecutive second cycles, to fast charge and discharge the battery pack 10. A time interval is extremely short and a frequency is high, and lithium ions do not accumulate on a battery SEI film. Therefore, a lithium precipitation phenomenon can be avoided, and a risk of a short circuit of the battery pack 10 is reduced. In addition, in a process of controlling fast charging and discharging of the battery pack 10, the sampling control unit 201 generates alternate and repeated pulse currents between the energy storage unit 203 and the battery pack 10, and uniformly heats the battery pack 10 by using Joule heat generated based on internal impedance of the battery pack 10 and heat generated by chemical energy of the battery pack 10, so that a capacity degradation problem caused by an internal temperature gradient of the battery can be effectively reduced, heating efficiency is higher, and a heating speed is higher.

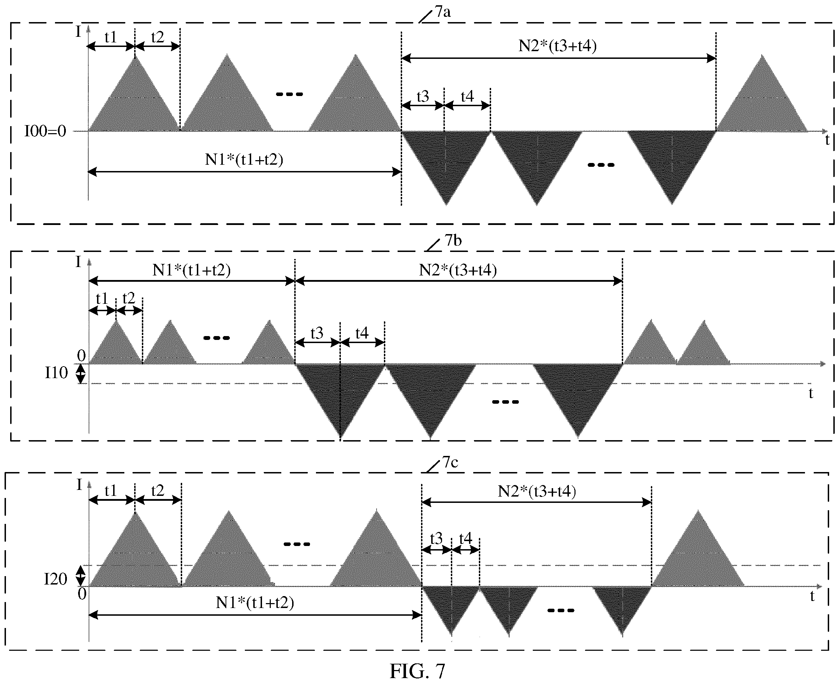

In some feasible implementations, when the battery pack 10 is in different states (for example, the heating state, the heating and charging state, or the heating and discharging state), for a schematic diagram of a current waveform of the first inductor L1, refer to FIG. 7. FIG. 7 is a schematic diagram of an inductor current waveform of a battery system according to this application. For ease of description, the following uses an example in which the first cycle is t1+t2 and the second cycle is t3+t4 for description. Details are not described below again. When the battery pack 10 is in the heating state, a current waveform of the first inductor L1 is shown in 7a in FIG. 7. A current waveform of the first inductor L1 in N1*(t1+t2) is symmetric to a current waveform of the first inductor L1 in N2*(t3+t4), so that it can be learned that an area corresponding to the current waveform of the first inductor L1 in N1 *(t1+t2) minus an area corresponding to the current waveform of the first inductor L1 in N2*(t3+t4) is equal to an average charge/discharge current value 100, and I00=0. In other words, the average charge/discharge current value I00 of the battery pack 10 in a complete cycle (that is, N1*(t1+t2)+N2*(t3+t4)) is 0. In this way, the battery pack 10 is heated. When the battery pack 10 is in the heating and charging state, a current waveform of the first inductor L1 is shown in 7b in FIG. 7. An area corresponding to a current waveform of the first inductor L1 in N2*(t3+t4) minus an area corresponding to a current waveform of the first inductor L1 in N1*(t1+t2) is equal to an average charge/discharge current value I10, and I10 is less than or equal to the charge current limit value (that is, the maximum charge current). In other words, the average charge/discharge current value I10 of the battery pack 10 in a complete cycle (that is, N1*(t1+t2)+N2*(t3+t4)) is less than or equal to the charge current limit value. In this way, the battery pack 10 can be charged by using the average charge/discharge current value I10 while the battery pack 10 is heated.

When the battery pack 10 is in the heating and discharging state, a current waveform of the first inductor L1 is shown in 7c in FIG. 7. An area corresponding to a current waveform of the first inductor L1 in N1*(t1+t2) minus an area corresponding to a current waveform of the first inductor L1 in N2*(t3+t4) is equal to an average charge/discharge current value I20, and I20 is less than or equal to the discharge current limit value (that is, the maximum discharge current). In other words, the average charge/discharge current value I20 of the battery pack 10 in a complete cycle (that is, N1*(t1+t2)+N2*(t3+t4)) is less than or equal to the discharge current limit value. In this way, the battery pack 10 can be discharged outwards by using the average charge/discharge current value I20 while the battery pack 10 is heated. It may be understood that the sampling control unit 201 may heat, heat and charge, or heat and discharge the battery pack 10, to meet a customer requirement for a charge/discharge capacity and time-effective use. In addition, when the battery pack 10 is in a safe state, the battery pack 10 can be fast charged and discharged to the maximum extent, to ensure energy maximization, higher energy utilization, higher safety, and higher applicability.

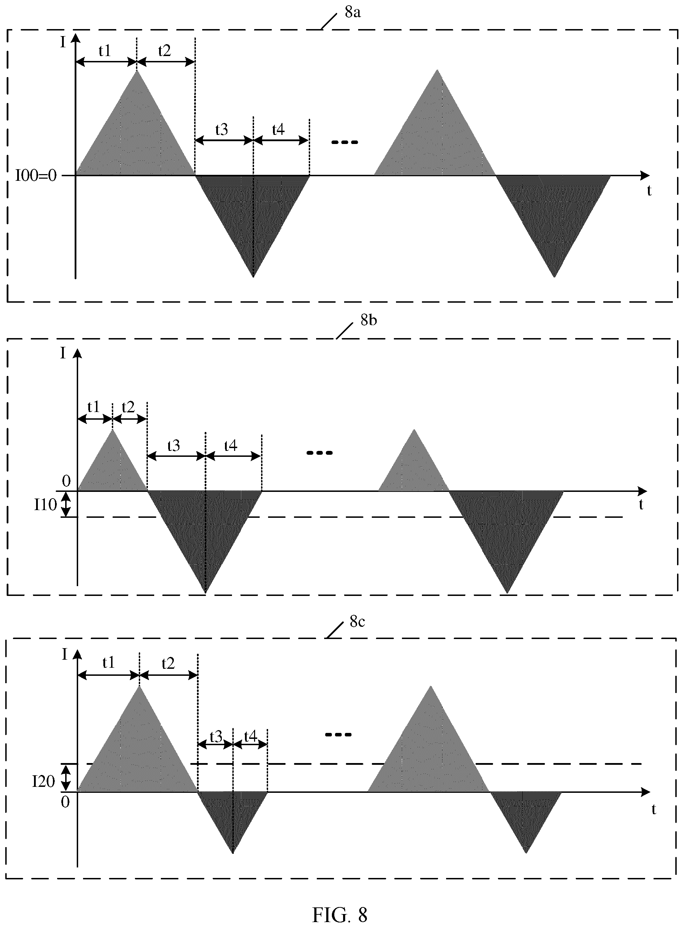

In some feasible implementations, when both N1 and N2 are 1, and the battery pack 10 is in different states, for a current waveform of the first inductor L1, refer to FIG. 8. FIG. 8 is a schematic diagram of another inductor current waveform of a battery system according to this application. When the battery pack 10 is in the heating state, a current waveform of the first inductor L1 is shown in 8a in FIG. 8. A current waveform of the first inductor L1 in t1+t2 is symmetric to a current waveform of the first inductor L1 in t3+t4, so that it can be learned that an area corresponding to the current waveform of the first inductor L1 in t1+t2 minus an area corresponding to the current waveform of the first inductor L1 in t3+t4 is equal to an average charge/discharge current value I00, and I00=0. In other words, the average charge/discharge current value I00 of the battery pack 10 in a complete cycle (that is, t1+t2+t3+t4) is 0. In this way, the battery pack 10 is heated. It may be understood that, when the process of heating the battery pack 10 includes a plurality of complete cycles, the average charge/discharge current value I00 of the battery pack 10 in each of the plurality of complete cycles (that is, t1+t2+t3+t4) is 0.

When the battery pack 10 is in the heating and charging state, a current waveform of the first inductor L1 is shown in 8b in FIG. 8. An area corresponding to a current waveform of the first inductor L1 in t3+t4 minus an area corresponding to a current waveform of the first inductor L1 in t1+t2 is equal to an average charge/discharge current value I10, and I10 is less than or equal to the charge current limit value (that is, the maximum charge current). In other words, the average charge/discharge current value I10 of the battery pack 10 in a complete cycle (that is, t1+t2+t3+t4) is less than or equal to the charge current limit value. In this way, the battery pack 10 can be charged by using the average charge/discharge current value I10 while the battery pack 10 is heated. It may be understood that, when the process of heating the battery pack 10 and charging the battery pack 10 includes a plurality of complete cycles, the average charge/discharge current value I10 of the battery pack 10 in each of the plurality of complete cycles (that is, t1+t2+t3+t4) is less than or equal to the charge current limit value.

When the battery pack 10 is in the heating and discharging state, a current waveform of the first inductor L1 is shown in 8c in FIG. 8. An area corresponding to a current waveform of the first inductor L1 in t1+t2 minus an area corresponding to a current waveform of the first inductor L1 in t3+t4 is equal to an average charge/discharge current value I20, and I20 is less than or equal to the discharge current limit value (that is, the maximum discharge current). In other words, the average charge/discharge current value I20 of the battery pack 10 in a complete cycle (that is, t1+t2+t3+t4) is less than or equal to the discharge current limit value. In this way, the battery pack 10 can be discharged outwards by using the average charge/discharge current value I20 while the battery pack 10 is heated. It may be understood that, when the process of heating the battery pack 10 and discharging the battery pack 10 outwards includes a plurality of complete cycles, the average charge/discharge current value I20 of the battery pack 10 in each of the plurality of complete cycles (that is, t1+t2+t3+t4) is less than or equal to the discharge current limit value.

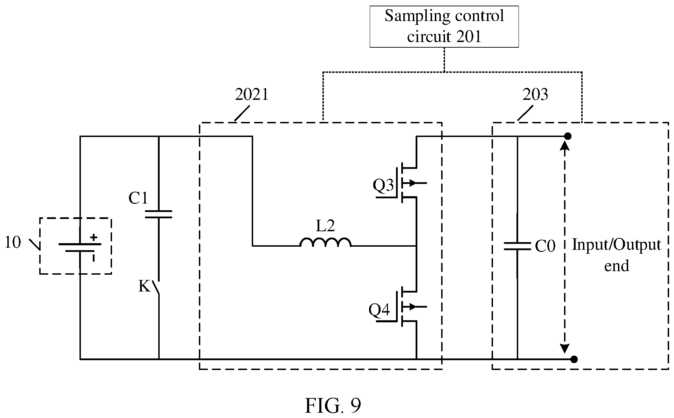

In some feasible implementations, when the circuit topology of the DC/DC conversion circuit 2021 is the bidirectional DC/DC right half-bridge circuit, FIG. 9 is another schematic structural diagram of a battery system according to this application. As shown in FIG. 9, the DC/DC conversion circuit 2021 shown in FIG. 3 includes a third switch Q3, a fourth switch Q4, and a second inductor L2; the energy storage unit 203 shown in FIG. 3 includes a capacitor C0; the third switch Q3 and the fourth switch Q4 may be connected in series and then connected in parallel to the capacitor C0; one end of the battery pack 10 may be connected to a series connection point of the third switch Q3 and the fourth switch Q4 by using the second inductor L2; and the other end of the battery pack 10 may be connected to a parallel connection end of the fourth switch Q4 and the capacitor C0. Herein, the third switch Q3 and the fourth switch Q4 are alternately turned on. To be specific, when the third switch Q3 is turned on, the fourth switch Q4 is turned off, or when the third switch Q3 is turned off, the fourth switch Q4 is turned on. Optionally, the energy storage unit 203 further includes an external power supply (not shown). The two ends of the capacitor C0 may be used as an input/output end to connect to the external power supply. In the process of charging the battery pack 10, an input/output end of the energy storage unit 203 may be used as an input end. In the process of discharging the battery pack 10, an input/output end of the energy storage unit 203 may be used as an output end. Optionally, the battery management system 20 may further include a capacitor C1 and a switch K that are connected in series. When the battery pack 10 needs to be heated, the switch K is turned off. When the battery pack 10 does not need to be heated, the switch K is turned on to supply power to the load.

In some feasible implementations, in a process of heating the battery pack 10, the sampling control unit 201 may control, based on a switching duty cycle and a switching frequency of each of the third switch Q3 and the fourth switch Q4, the switch to be turned on or turned off, to fast charge and discharge the battery pack 10 in the N1 consecutive first cycles and the N2 consecutive second cycles. In addition, in a process of fast charging and discharging the battery pack 10, the average charge/discharge current value of the battery pack 10 may be controlled to be less than or equal to the charge/discharge current limit value, so that the battery pack 10 can be heated, heated and charged, or heated and discharged, to ensure energy maximization, higher energy utilization, and higher safety. A wave-emitting mode of each switch may be a triangular wave. Optionally, the wave-emitting mode of each switch may further include but is not limited to a square wave, a trapezoidal wave, a sine wave, or a combination of the foregoing waveforms. This may be specifically determined based on an actual application scenario, and is not limited herein.

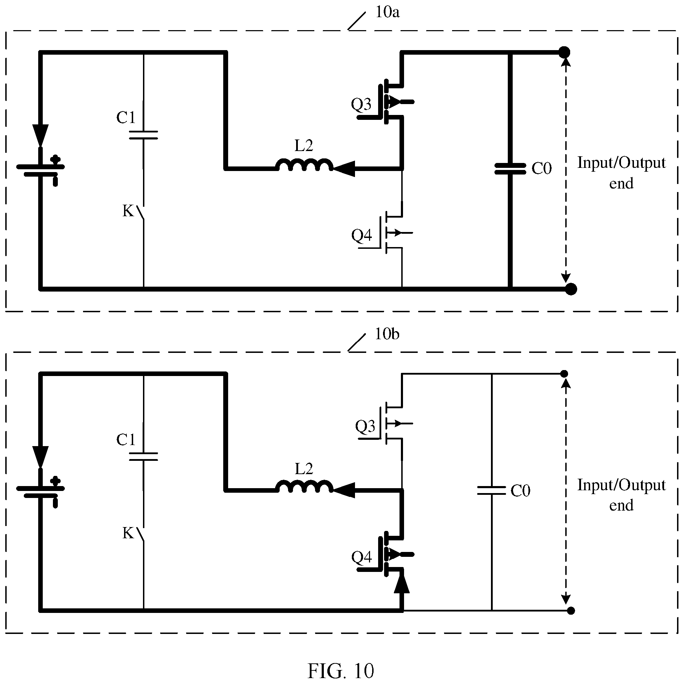

In some feasible implementations, it is assumed that the N2 consecutive second cycles are earlier than the N1 consecutive first cycles. In the process of charging the battery pack 10, FIG. 10 is a schematic diagram of another charge current flow direction of a battery system according to this application. When the second cycle includes a first charging time period and a second charging time period later than the first charging time period, as shown in 10a in FIG. 10, based on the switching duty cycle and the switching frequency of each switch, the sampling control unit 201 may control, in a first charging time period of the 1^{st} second cycle, the fourth switch Q4 to be turned off and the third switch Q3 to be turned on, so that the capacitor C0 and the external power supply connected to the input/output end can perform bucked charging on the battery pack 10, and the second inductor L2 stores energy (that is, a current of the second inductor L2 increases), until the current of the second inductor L2 reaches a preset current value or the first charging time period ends (in this case, the current of the second inductor L2 is the largest). The preset current value herein may be determined by the battery parameters, the voltage and the current limit value of the DC/DC conversion unit 201, and an inductance amount of the second inductor L2. After the second inductor L2 stores energy, as shown in 10b in FIG. 10, the sampling control unit 201 may control, in a second charging time period of the 1^{st} second cycle, the third switch Q3 to be turned off and the fourth switch Q4 to be turned on, so that the battery pack 10 is charged through freewheeling of the second inductor L2 until the current of the second inductor L2 decreases to 0. In this way, the energy storage unit 203 can be controlled, in the 1^{st} second cycle, to charge the battery pack 10 by using the DC/DC conversion circuit 2021. It should be noted that, for a specific implementation in which the sampling control unit 201 controls charging of the battery pack 10 in the 2^{nd} second cycle to an N2^{th} second cycle, refer to the specific implementation in which the sampling control unit 201 controls charging of the battery pack 10 in the 1^{st} second cycle. Details are not described below again.

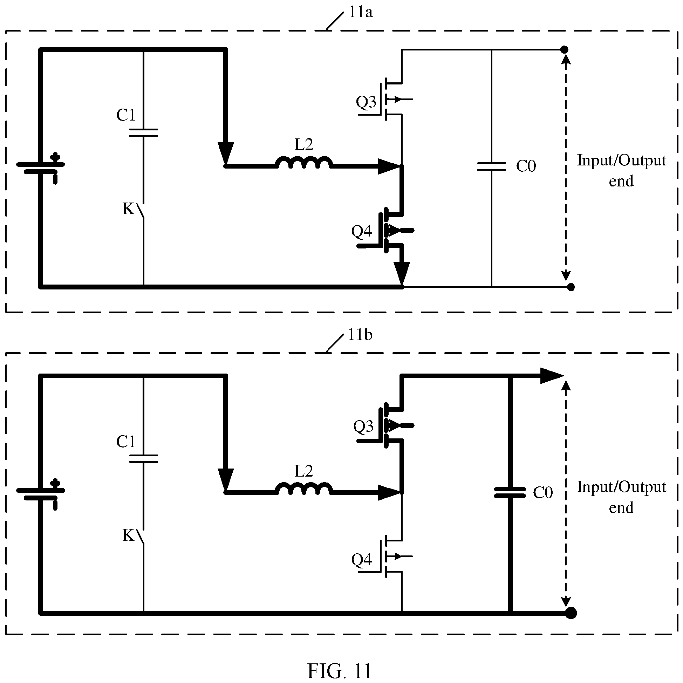

In some feasible implementations, in the process of discharging the battery pack 10, FIG. 11 is a schematic diagram of another discharge current flow direction of a battery system according to this application. When the first cycle includes a first discharging time period and a second discharging time period later than the first discharging time period, as shown in 11a in FIG. 11, based on the switching duty cycle and the switching frequency of each of the third switch Q3 and the fourth switch Q4, the sampling control unit 201 may control, in a first discharging time period of the 1^{st} first cycle, the third switch Q3 to be turned off and the fourth switch Q4 to be turned on, so that the battery pack 10 can be boosted (boosted) by the fourth switch Q4 to discharge outwards, and the second inductor L2 stores energy (in this case, a current of the second inductor L2 increases in a negative direction), until the current of the second inductor L2 reaches a preset current value or the first discharging time period ends. After the second inductor L2 stores energy, as shown in 11b in FIG. 11, based on the switching duty cycle and the switching frequency of each switch, the sampling control unit 201 may control, in a second discharging time period of the 1^{st} first cycle, the fourth switch Q4 to be turned off and the third switch Q3 to be turned on, so that the battery pack 10 and the second inductor L2 discharge, by using the third switch Q3, to the capacitor C0 and/or the external power supply connected to the input/output end, until the current of the second inductor L2 decreases to 0. In this way, the battery pack 10 can be controlled, in the 1^{st} first cycle, to discharge to the energy storage unit 203 by using the DC/DC conversion circuit 2021. It should be noted that, for a specific implementation in which the sampling control unit 201 controls discharging of the battery pack 10 in the 2^{nd} first cycle to an N1^{th} first cycle, refer to the specific implementation in which the sampling control unit 201 controls discharging of the battery pack 10 in the 1^{st} first cycle. Details are not described below again. It may be understood that, the sampling control unit 201 may perform alternate control on the third switch Q3 and the fourth switch Q4 beyond dead time, and generate alternate and repeated pulse currents between the energy storage unit 203 and the battery pack 10, so that a self-heating function of the battery pack 10 can be implemented based on heat generated based on internal impedance of the battery pack 10, to further improve heating efficiency and a heating speed of the battery pack 10. In addition, the battery pack 10 may be further heated and charged or heated and discharged, so that a charging rate and a power backup capability of the battery pack 10 in a low-temperature environment are improved, and applicability is higher.

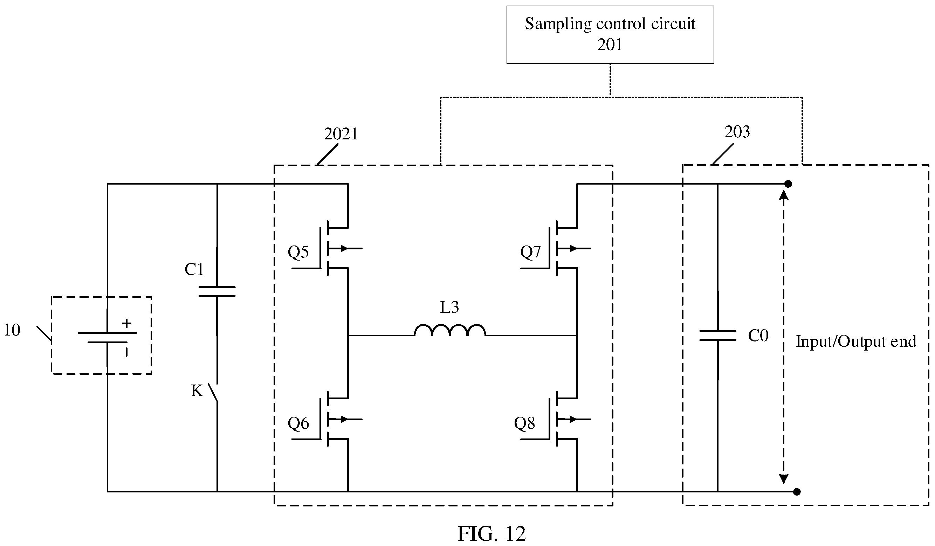

In some feasible implementations, when the circuit topology of the DC/DC conversion circuit 2021 is the bidirectional DC/DC H-bridge circuit, FIG. 12 is still another schematic structural diagram of a battery system according to this application. As shown in FIG. 12, the DC/DC conversion circuit 2021 shown in FIG. 3 includes a fifth switch Q5, a sixth switch Q6, a seventh switch Q7, an eighth switch Q8, and a third inductor L3; the energy storage unit 203 shown in FIG. 3 includes a capacitor C0; the fifth switch Q5 and the sixth switch Q6 may be connected in series and then connected in parallel to the battery pack 10; the seventh switch Q7 and the eighth switch Q8 may be connected in series and then connected in parallel to the capacitor C0; and a series connection point of the fifth switch Q5 and the sixth switch Q6 may be connected to a series connection point between the seventh switch Q7 and the eighth switch Q8 by using the third inductor L3. Herein, the fifth switch Q5 and the sixth switch Q6 are alternately turned on. To be specific, when the fifth switch Q5 is turned on, the sixth switch Q6 is turned off, or when the fifth switch Q5 is turned off, the sixth switch Q6 is turned on. The seventh switch Q7 and the eighth switch Q8 are alternately turned on. To be specific, when the seventh switch Q7 is turned on, the eighth switch Q8 is turned off, or when the seventh switch Q7 is turned off, the eighth switch Q8 is turned on. Optionally, the energy storage unit 203 further includes an external power supply (not shown). The two ends of the capacitor C0 may be used as an input/output end to connect to the external power supply. In the process of charging the battery pack 10, an input/output end of the energy storage unit 203 may be used as an input end. In the process of discharging the battery pack 10, an input/output end of the energy storage unit 203 may be used as an output end. Optionally, the battery management system 20 may further include a capacitor C1 and a switch K that are connected in series. When the battery pack 10 needs to be heated, the switch K is turned off. When the battery pack 10 does not need to be heated, the switch K is turned on to supply power to the load.

In some feasible implementations, the sampling control unit 201 may control, based on a switching duty cycle and a switching frequency of each of the fifth switch Q5 to the eighth switch Q8, the switch to be turned on or turned off, to fast charge and discharge the battery pack 10 in the N1 consecutive first cycles and the N2 consecutive second cycles. In addition, in a process of fast charging and discharging the battery pack 10, the average charge/discharge current value of the battery pack 10 may be controlled to be less than or equal to the charge/discharge current limit value, so that the battery pack 10 can be heated, heated and charged, or heated and discharged, to ensure energy maximization, higher energy utilization, and higher safety. A wave-emitting mode of each of the fifth switch Q5 to the eighth switch Q8 may be an irregular trapezoidal wave. In addition, the wave-emitting mode of each switch may further include but is not limited to a square wave, a triangular wave, a trapezoidal wave, a sine wave, or a combination of the foregoing waveforms. This is not limited herein. It may be understood that, the sampling control unit 201 may perform alternate control on the fifth switch Q5 and the sixth switch Q6, or the seventh switch Q7 and the eighth switch Q8 beyond dead time, so that a switching ripple current flows in and out of the battery pack 10 in the N1 consecutive first cycles and the N2 consecutive second cycles, to fast charge and discharge the battery pack 10. In this way, heating efficiency and a heating speed of the battery pack 10 are improved, and energy utilization is high. In addition, the battery pack 10 may be further heated and charged or heated and discharged, so that a charging rate and a power backup capability of the battery pack 10 in a low-temperature environment are improved, and applicability is higher.

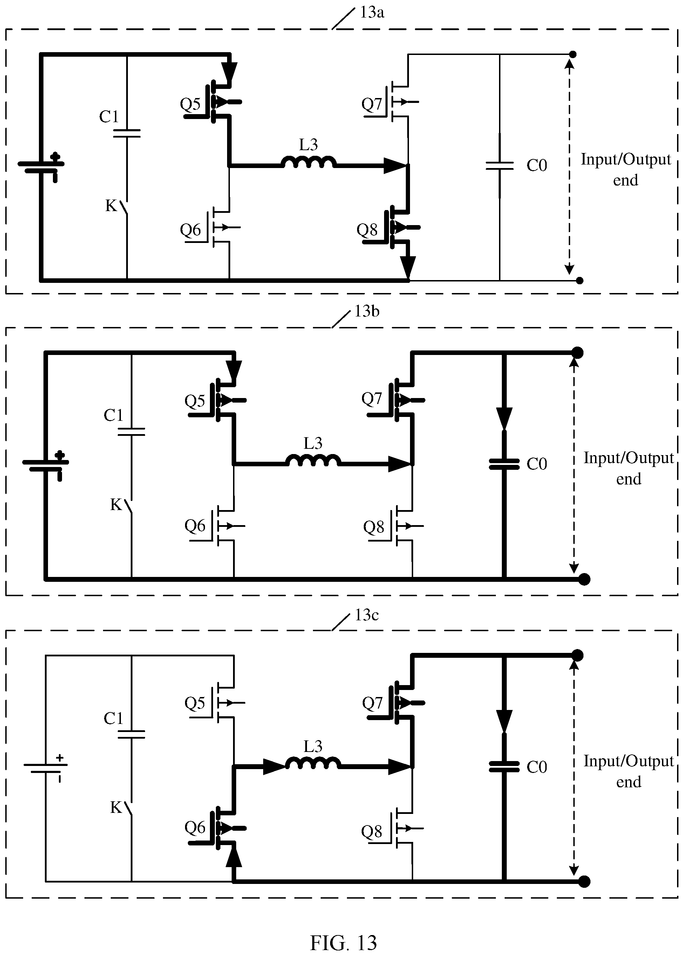

In some feasible implementations, it is assumed that the N1 consecutive first cycles are earlier than the N2 consecutive second cycles. In the process of discharging the battery pack 10, FIG. 13 is a schematic diagram of another discharge current flow direction of a battery system according to this application. When the first cycle includes a first discharging time period, a second discharging time period, and a third discharging time period, the first discharging time period is earlier than the second discharging time period, and the second discharging time period is earlier than the third discharging time period, as shown in 13a in FIG. 13, based on the switching duty cycle and the switching frequency of each of the fifth switch Q5 to the eighth switch Q8, the sampling control unit 201 may control, in a first discharging time period of the 1^{st} first cycle, the sixth switch Q6 and the seventh switch Q7 to be turned off and the fifth switch Q5 and the eighth switch Q8 to be turned on, so that the battery pack 10 is discharged outwards, and the third inductor L3 stores energy. After the third inductor L3 stores energy, as shown in 13b in FIG. 13, based on the switching duty cycle and the switching frequency of each switch, the sampling control unit 201 may control, in a second discharging time period of the 1^{st} first cycle, the sixth switch Q6 and the eighth switch Q8 to be turned off and the fifth switch Q5 and the seventh switch Q7 to be turned on, so that the battery pack 10 and the third inductor L3 can be discharged to the capacitor C0 and/or the external power supply connected to the input/output end. Further, as shown in 13c in FIG. 13, based on the switching duty cycle and the switching frequency of each switch, the sampling control unit 201 may control, in a third discharging time period of the 1^{st} first cycle, the fifth switch Q5 and the eighth switch Q8 to be turned off and the sixth switch Q6 and the seventh switch Q7 to be turned on, to discharge to the capacitor C0 and/or the external power supply connected to the input/output end through freewheeling of the third inductor L3, until the current of the first inductor L1 decreases to 0. In this way, the battery pack 10 can be controlled, in the 1^{st} first cycle, to discharge to the energy storage unit 203 by using the DC/DC conversion circuit 2021. It should be noted that, for a specific implementation in which the sampling control unit 201 controls discharging of the battery pack 10 in the 2^{nd} first cycle to an N1^{th} first cycle, refer to the specific implementation in which the sampling control unit 201 controls discharging of the battery pack 10 in the 1^{st} first cycle. Details are not described below again.

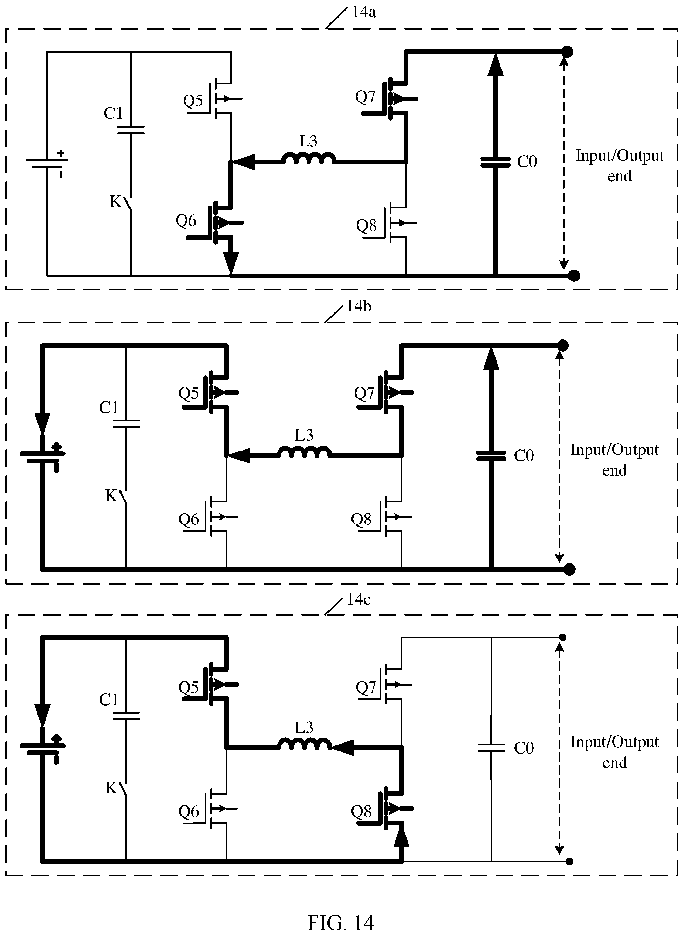

In some feasible implementations, in the process of charging the battery pack 10, FIG. 14 is a schematic diagram of still another charge current flow direction of a battery system according to this application. When the second cycle includes a first charging time period, a second charging time period, and a third charging time period, the first charging time period is earlier than the second charging time period, and the second charging time period is earlier than the third charging time period, as shown in 14a in FIG. 14, based on the switching duty cycle and the switching frequency of each of the fifth switch Q5 to the eighth switch Q8, the sampling control unit 201 may control, in a first charging time period of the 1^{st} second cycle, the fifth switch Q5 and the eighth switch Q8 to be turned off and the sixth switch Q6 and the seventh switch Q7 to be turned on, so that the third inductor L3 can store energy by using the capacitor C0 and/or the external power supply connected to the input/output end. After the third inductor L3 stores energy, as shown in 14b in FIG. 14, based on the switching duty cycle and the switching frequency of each switch, the sampling control unit 201 may control, in a second charging time period of the 1^{st} second cycle, the sixth switch Q6 and the eighth switch Q8 to be turned off and the fifth switch Q5 and the seventh switch Q7 to be turned on, so that the battery pack 10 can be charged by using the capacitor C0 and/or the external power supply connected to the input/output end, and the third inductor L3. Further, as shown in 14c in FIG. 14, based on the switching duty cycle and the switching frequency of each switch, the sampling control unit 201 may control, in a third charging time period of the 1^{st} second cycle, the sixth switch Q6 and the seventh switch Q7 to be turned off and the fifth switch Q5 and the eighth switch Q8 to be turned on, so that a current of the third inductor L3 freewheels to charge the battery pack 10 by using the fifth switch Q5 and the seventh switch Q7. In this way, the energy storage unit 203 can be controlled, in the 1^{st} second cycle, to charge the battery pack 10 by using the DC/DC conversion circuit 2021. It should be noted that, for a specific implementation in which the sampling control unit 201 controls charging of the battery pack 10 in the 2^{nd} second cycle to an N2^{th} second cycle, refer to the specific implementation in which the sampling control unit 201 controls charging of the battery pack 10 in the 1^{st} second cycle. Details are not described below again.

It may be understood that, the sampling control unit 201 may perform alternate control on the fifth switch Q5 and the sixth switch Q6 or the seventh switch Q7 and the eighth switch Q8 beyond dead time, and generate alternate and repeated pulse currents between the energy storage unit 203 and the battery pack 10, to improve heating efficiency and a heating speed of the battery pack 10. In addition, a total amount of charge that flows in or out of the battery pack 10 in a complete switching cycle (that is, the N1 consecutive first cycles and the N2 consecutive second cycles) may be further controlled, so that the battery pack 10 is heated, heated and charged or heated and discharged, a charging rate and a power backup capability of the battery pack 10 in a low-temperature environment are improved, and applicability is higher.

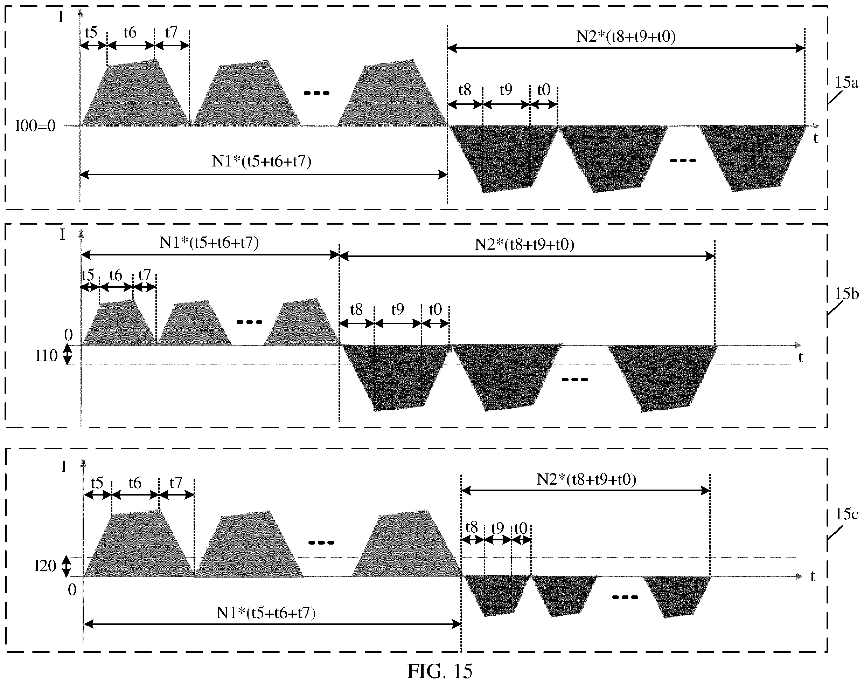

In some feasible implementations, when the battery pack 10 is in different states (for example, the heating state, the heating and charging state, or the heating and discharging state), for a current waveform of the third inductor L3, refer to FIG. 15. FIG. 15 is a schematic diagram of another inductor current waveform of a battery system according to this application. For ease of description, the following uses an example in which the first cycle is t5+t6+t7 and the second cycle is t8+t9+t0 for description. Details are not described below again. When the battery pack 10 is in the heating state, a current waveform of the third inductor L3 is shown in 15a in FIG. 15. A current waveform of the third inductor L3 in N1*(t5+t6+t7) is symmetric to a current waveform of the third inductor L3 in N2*(t8+t9+t0), so that it can be learned that an area corresponding to the current waveform of the third inductor L3 in N1*(t5+t6+t7) minus an area corresponding to the current waveform of the third inductor L3 in N2*(t8+t9+t0) is equal to an average charge/discharge current value I00, and I00=0. In other words, the average charge/discharge current value I00 of the battery pack 10 in a complete cycle (that is, N1 *(t5+t6+t7)+N2*(t8+t9+t0)) is 0. In this way, the battery pack 10 is heated. When the battery pack 10 is in the heating and charging state, a current waveform of the third inductor L3 is shown in 15b in FIG. 15. An area corresponding to a current waveform of the third inductor L3 in N2*(t8+t9+t0) minus an area corresponding to a current waveform of the third inductor L3 in N1*(t5+t6+t7) is equal to an average charge/discharge current value I10, and I10 is less than or equal to the charge current limit value (that is, the maximum charge current). In other words, the average charge/discharge current value I10 of the battery pack 10 in a complete cycle (that is, N1 *(t5+t6+t7)+N2*(t8+t9+t0)) is less than or equal to the charge current limit value. In this way, the battery pack 10 can be charged by using the average charge/discharge current value I10 while the battery pack 10 is heated.

When the battery pack 10 is in the heating and discharging state, a current waveform of the third inductor L3 is shown in 15c in FIG. 15. An area corresponding to a current waveform of the third inductor L3 in N1*(t5+t6+t7) minus an area corresponding to a current waveform of the third inductor L3 in N2*(t8+t9+t0) is equal to an average charge/discharge current value I20, and I20 is less than or equal to the discharge current limit value (that is, the maximum discharge current). In other words, the average charge/discharge current value I20 of the battery pack 10 in a complete cycle (that is, N1*(t5+t6+t7)+N2*(t8+t9+t0)) is less than or equal to the discharge current limit value. In this way, the battery pack 10 can be discharged outwards by using the average charge/discharge current value I20 while the battery pack 10 is heated. It may be understood that, because ΔI=ΔV*t/L, where ΔI may indicate a difference between a maximum current of the third inductor L3 and the average charge/discharge current value (for example, I00, I10, or I20), ΔV may indicate an inductor voltage difference, t may indicate time, and L may indicate an inductance amount (that is, a parameter representing a capability of the third inductor L3 to generate a magnetic flux and store a magnetic field), when L and ΔV are fixed, the sampling control unit 201 needs to increase the time t to reduce the switching frequency of each switch, so that the average charge/discharge current value (for example, I00, I10, or I20) is less than or equal to the charge/discharge current limit value. In this way, the battery pack 10 can be heated, heated or charged, or heated and discharged, to meet a customer requirement for a charge/discharge capacity and time-effective use. In addition, when the battery pack 10 is in a safe state, the battery pack 10 can be fast charged and discharged to the maximum extent, to ensure energy maximization, higher energy utilization, higher safety, and higher applicability.

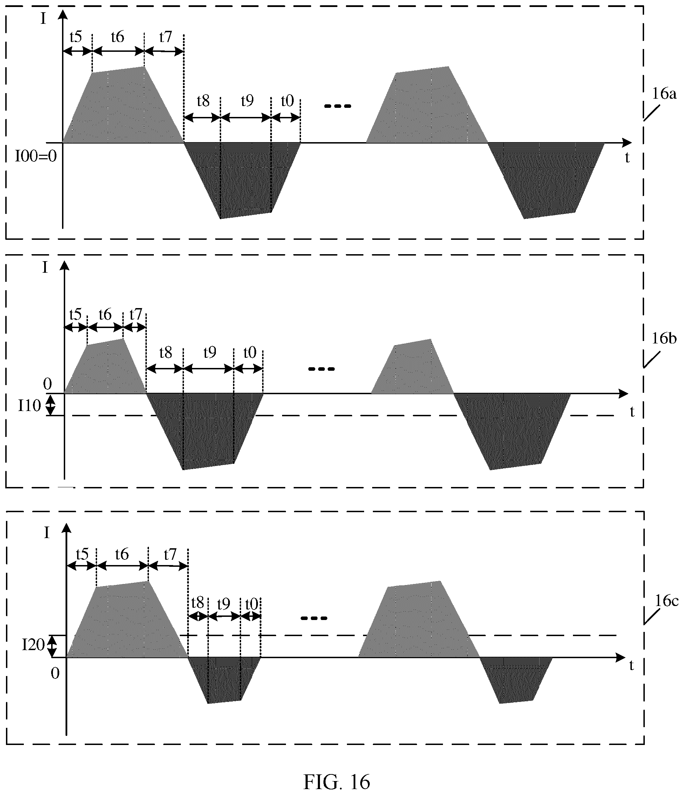

In some feasible implementations, when both N1 and N2 are 1, and the battery pack 10 is in different states, for a current waveform of the third inductor L3, refer to FIG. 16. FIG. 16 is a schematic diagram of another inductor current waveform of a battery system according to this application. When the battery pack 10 is in the heating state, a current waveform of the third inductor L3 is shown in 16a in FIG. 16. A current waveform of the third inductor L3 in t5+t6+t7 is symmetric to a current waveform of the third inductor L3 in t8+t9+t0, so that it can be learned that an area corresponding to the current waveform of the third inductor L3 in t5+t6+t7 minus an area corresponding to the current waveform of the third inductor L3 in t8+t9+t0 is equal to an average charge/discharge current value I00, and I00=0. In other words, the average charge/discharge current value I00 of the battery pack 10 in a complete cycle (that is, t5+t6+t7+t8+t9+t0) is 0. In this way, the battery pack 10 is heated. It may be understood that, when the process of heating the battery pack 10 includes a plurality of complete cycles, the average charge/discharge current value I00 of the battery pack 10 in each of the plurality of complete cycles (that is, t5+t6+t7+t8+t9+t0) is 0.

When the battery pack 10 is in the heating and charging state, a current waveform of the third inductor L3 is shown in 16b in FIG. 16. An area corresponding to a current waveform of the third inductor L3 in t8+t9+t0 minus an area corresponding to a current waveform of the third inductor L3 in t5+t6+t7 is equal to an average charge/discharge current value I10, and I10 is less than or equal to the charge current limit value (that is, the maximum charge current). In other words, the average charge/discharge current value I10 of the battery pack 10 in a complete cycle (that is, t5+t6+t7+t8+t9+t0) is less than or equal to the charge current limit value. In this way, the battery pack 10 can be charged by using the average charge/discharge current value I10 while the battery pack 10 is heated. It may be understood that, when the process of heating the battery pack 10 and charging the battery pack 10 includes a plurality of complete cycles, the average charge/discharge current value I10 of the battery pack 10 in each of the plurality of complete cycles (that is, t5+t6+t7+t8+t9+t0) is less than or equal to the charge current limit value.

When the battery pack 10 is in the heating and discharging state, a current waveform of the third inductor L3 is shown in 16c in FIG. 16. An area corresponding to a current waveform of the third inductor L3 in t5+t6+t7 minus an area corresponding to a current waveform of the third inductor L3 in t8+t9+t0 is equal to an average charge/discharge current value I20, and I20 is less than or equal to the discharge current limit value (that is, the maximum discharge current). In other words, the average charge/discharge current value I20 of the battery pack 10 in a complete cycle (that is, t5+t6+t7+t8+t9+t0) is less than or equal to the discharge current limit value. In this way, the battery pack 10 can be discharged outwards by using the average charge/discharge current value I20 while the battery pack 10 is heated. It may be understood that, when the process of heating the battery pack 10 and discharging the battery pack 10 outwards includes a plurality of complete cycles, the average charge/discharge current value I20 of the battery pack 10 in each of the plurality of complete cycles (that is, t5+t6+t7+t8+t9+t0) is less than or equal to the discharge current limit value.

In some feasible implementations, when the DC/DC conversion unit 202 includes a plurality of DC/DC conversion circuits (for example, the DC/DC conversion circuit 2021 to the DC/DC conversion circuit 202n), circuit topologies of the DC/DC conversion circuit 2021 to the DC/DC conversion circuit 202n may be the same or may be different. This may be specifically determined based on an actual application scenario, and is not limited herein. For example, when the circuit topology of the DC/DC conversion circuit 2021 to the DC/DC conversion circuit 202n is the bidirectional DC/DC left half-bridge circuit shown in FIG. 4, for a specific working principle of the DC/DC conversion circuit 2022 (not shown) to the DC/DC conversion circuit 202n, refer to the specific working principle of the DC/DC conversion circuit 2021 in FIG. 5 to FIG. 7, and details are not described below again. When the circuit topology of the DC/DC conversion circuit 2021 to the DC/DC conversion circuit 202n is the bidirectional DC/DC right half-bridge circuit shown in FIG. 9, for a specific working principle of the DC/DC conversion circuit 2022 to the DC/DC conversion circuit 202n, refer to the specific working principle of the DC/DC conversion circuit 2021 in FIG. 10 and FIG. 11, and details are not described below again. When the circuit topology of the DC/DC conversion circuit 2021 to the DC/DC conversion circuit 202n is the bidirectional DC/DC H-bridge circuit shown in FIG. 12, for a specific working principle of the DC/DC conversion circuit 2022 to the DC/DC conversion circuit 202n, refer to the specific working principle of the DC/DC conversion circuit 2021 in FIG. 13 to FIG. 16, and details are not described below again. When the circuit topologies of the DC/DC conversion circuit 2021 to the DC/DC conversion circuit 202n include at least two circuit topologies of the bidirectional DC/DC left half-bridge circuit, the bidirectional DC/DC right half-bridge circuit, and the bidirectional DC/DC H-bridge circuit, for a specific working principle of the DC/DC conversion circuit 2021 to the DC/DC conversion circuit 202n, refer to the specific working principle of the DC/DC conversion circuit 2021 in FIG. 4 to FIG. 16, and details are not described below again. It may be understood that, the sampling control unit 201 may control the switches in the DC/DC conversion circuits to be turned on or turned off, so that current directions of the switches are basically the same, to superimpose currents of the DC/DC conversion circuits to increase a pulse current (that is, a charge current and a discharge current) of the battery pack 10. In this way, a heating speed is higher, heating efficiency of the battery pack 10 is further improved, and applicability is higher.

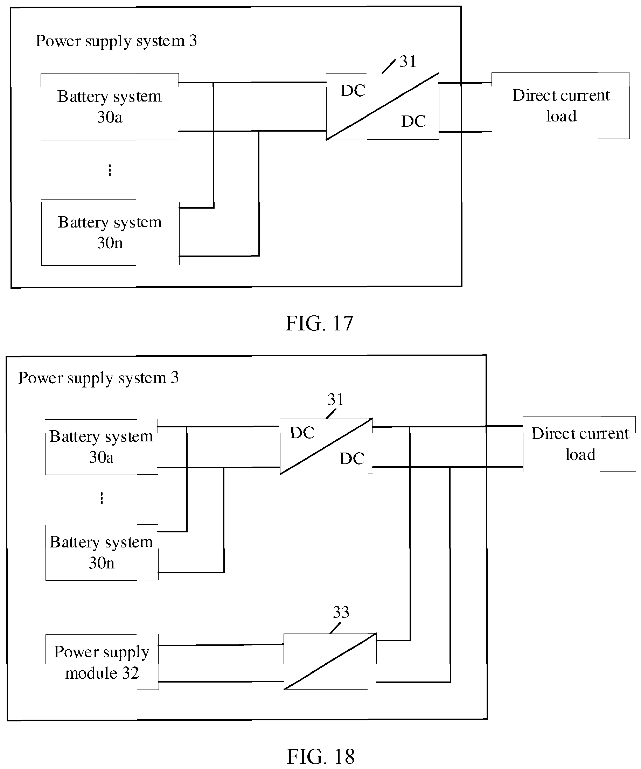

Further, FIG. 17 is a schematic structural diagram of a power supply system according to this application. As shown in FIG. 17, the power supply system 3 includes at least one battery system (that is, one or more battery systems, such as a battery system 30a to a battery system 30n) and a DC/DC conversion module 31. All of the battery system 30a to the battery system 30n may be connected in parallel and then connected to an input end of the DC/DC conversion module 31, and an output end of the DC/DC conversion module 31 may be connected to a direct current load. Optionally, the power supply system may further include a power generation component (not shown). The power generation component may generate electric energy and store the electric energy in the battery system 30a to the battery system 30n, so that the battery system 30a to the battery system 30n normally supply power. The power generation component 30 herein may include but is not limited to a solar power generation component, a wind power generation component, a hydrogen power generation component, or a diesel power generation component. This may be specifically determined based on an actual application scenario, and is not limited herein. When the battery system 30a to the battery system 30n are in a low-temperature environment and work normally, the DC/DC conversion module 31 may convert direct current energy provided by the battery system 30a to the battery system 30n into target direct current energy, and supply power to the direct current load based on the target direct current energy, to improve power supply efficiency in the low-temperature environment.

In some feasible implementations, FIG. 18 is another schematic structural diagram of a power supply system according to this application. As shown in FIG. 18, the power supply system 3 shown in FIG. 17 may further include a power supply module 32 and a power conversion module 33. The power supply module 32 may be connected to an input end of the power conversion module 33, and an output end of the power conversion module 33 may be connected to the direct current load. In an application scenario of photovoltaic energy storage based hybrid power supply, the power supply module 32 may include a photovoltaic array, the power conversion module 31 may be a DC/DC conversion module, and the photovoltaic array herein may include a plurality of photovoltaic strings connected in series and parallel. In an application scenario of wind energy storage based hybrid power supply, the power supply module 32 may include a generator, and the power conversion module 31 may be an AC/DC conversion module. When the battery system 30a to the battery system 30n are in a low-temperature environment and work normally, the DC/DC conversion module 31 may supply power to the direct current load based on direct current energy provided by the battery system 30a to the battery system 30n, and the power conversion module 33 may supply power to the direct current load based on direct current energy provided by the photovoltaic array or alternating current energy provided by the generator, to further improve power supply efficiency in the low-temperature environment.

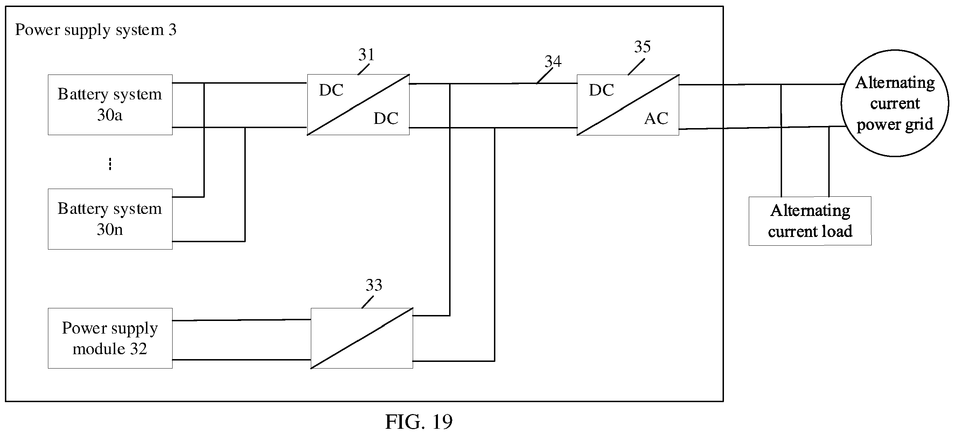

In some feasible implementations, FIG. 19 is still another schematic structural diagram of a power supply system according to this application. As shown in FIG. 19, the power supply system 3 shown in FIG. 18 further includes a direct current bus 34 and a DC/AC conversion module 35, the DC/DC conversion module 31 and the power conversion module 33 may be separately connected to an input end of the DC/AC conversion module 35 by using the direct current bus 34, and an output end of the DC/AC conversion module 35 may be connected to an alternating current load or an alternating current power grid. Optionally, the power supply system 3 may further include an on-grid/off-grid connection box (not shown), and the output end of the DC/AC conversion module 35 may be connected to the alternating current load or the alternating current power grid by using the on-grid connection box. When the battery system 30a to the battery system 30n are in a low-temperature environment and work normally, the DC/AC conversion module 35 may convert direct current energy input by the DC/DC conversion module 31 and direct current energy input by the power conversion module 33 into alternating current energy, and supply power to the alternating current load or the alternating current power grid based on the alternating current energy, to improve power supply efficiency of the power supply system. It should be noted that a specific connection manner between functional modules in the power supply system provided in this application may be determined based on an actual application scenario. This is not limited herein.

During specific implementation, for more operations performed by the battery system in the power supply system provided in this application, refer to the battery system shown in FIG. 2 to FIG. 16 and the implementations performed in the working principles of the battery system. Details are not described herein again.

In this application, the battery pack can be fast charged and discharged in the at least one consecutive first cycle and the at least one consecutive second cycle, to perform pulse heating on the battery pack. This avoids a lithium precipitation phenomenon, and reduces a risk of a battery short circuit. The battery pack is self-heated from inside to outside by using a Joule thermal effect of the battery pack, to uniformly heat the battery pack. In this way, heating efficiency is improved, a heating speed is higher, a system structure is simple, costs are low, and applicability is high.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A battery system, wherein the battery system comprises a battery pack and a battery management system; the battery management system is connected to the battery pack; the battery management system comprises a sampling control unit, a direct current DC/DC conversion unit, and an energy storage unit; the DC/DC conversion unit and the energy storage unit are connected in parallel; and
the sampling control unit is configured to: based on battery parameters of the battery pack and a voltage and a current limit value of the DC/DC conversion unit, control, in each of at least one consecutive first cycle, the battery pack to discharge to the energy storage unit by using the DC/DC conversion unit; control, in each of at least one consecutive second cycle, the energy storage unit to charge the battery pack by using the DC/DC conversion unit; and control, in the at least one consecutive first cycle and the at least one consecutive second cycle, an average charge/discharge current value of the battery pack to be less than or equal to a charge/discharge current limit value.

2. The system according to claim 1, wherein the battery parameters of the battery pack comprise a battery voltage and a battery temperature; and
the sampling control unit is configured to: obtain a first charge/discharge current limit value of the battery pack based on the battery voltage; obtain a second charge/discharge current limit value of the battery pack based on the battery temperature; and obtain the charge/discharge current limit value based on the smaller one of the first charge/discharge current limit value and the second charge/discharge current limit value.

3. The system according to claim 1 or 2, wherein the DC/DC conversion unit comprises at least one DC/DC conversion circuit, and DC/DC conversion circuits are connected in parallel;
the sampling control unit is configured to obtain a switching duty cycle and a switching frequency of each of a plurality of switches in each DC/DC conversion circuit based on the battery parameters and the voltage and the current limit value that are of the DC/DC conversion unit; and
the sampling control unit is further configured to: based on the switching duty cycle and the switching frequency of each switch in each DC/DC conversion circuit, control, in each first cycle, the battery pack to discharge to the energy storage unit by using the DC/DC conversion circuit, and control, in each second cycle, the energy storage unit to charge the battery pack by using the DC/DC conversion circuit.

4. The system according to claim 3, wherein the DC/DC conversion circuit comprises a first switch, a second switch, and a first inductor; the energy storage unit comprises a capacitor; the first switch and the second switch are connected in series and then connected in parallel to the battery pack; a series connection end of the first switch and the second switch is connected to one end of the capacitor by using the first inductor; and a parallel connection end of the second switch and the battery pack is connected to the other end of the capacitor.

5. The system according to claim 4, wherein the first cycle comprises a first discharging time period and a second discharging time period later than the first discharging time period; and
the sampling control unit is configured to: based on the switching duty cycle and the switching frequency of each switch, control, in the first discharging time period, the second switch to be turned off and the first switch to be turned on, and control, in the second discharging time period, the first switch to be turned off and the second switch to be turned on.

6. The system according to claim 4, wherein the second cycle comprises a first charging time period and a second charging time period later than the first charging time period; and
the sampling control unit is configured to: based on the switching duty cycle and the switching frequency of each switch, control, in the first charging time period, the first switch to be turned off and the second switch to be turned on, and control, in the second charging time period, the second switch to be turned off and the first switch to be turned on.

7. The system according to claim 3, wherein the DC/DC conversion circuit comprises a third switch, a fourth switch, and a second inductor; the energy storage unit comprises a capacitor; the third switch and the fourth switch are connected in series and then connected in parallel to the capacitor; one end of the battery pack is connected to a series connection point of the third switch and the fourth switch by using the second inductor; and the other end of the battery pack is connected to a parallel connection end of the fourth switch and the capacitor.

8. The system according to claim 7, wherein the first cycle comprises a first discharging time period and a second discharging time period later than the first discharging time period; and
the sampling control unit is configured to: based on the switching duty cycle and the switching frequency of each switch, control, in the first discharging time period, the third switch to be turned off and the fourth switch to be turned on, and control, in the second discharging time period, the fourth switch to be turned off and the third switch to be turned on.

9. The system according to claim 7, wherein the second cycle comprises a first charging time period and a second charging time period later than the first charging time period; and
the sampling control unit is configured to: based on the switching duty cycle and the switching frequency of each switch, control, in the first charging time period, the fourth switch to be turned off and the third switch to be turned on, and control, in the second charging time period, the third switch to be turned off and the fourth switch to be turned on.

10. The system according to claim 3, wherein the DC/DC conversion circuit comprises a fifth switch, a sixth switch, a seventh switch, an eighth switch, and a third inductor; the energy storage unit comprises a capacitor; the fifth switch and the sixth switch are connected in series and then connected in parallel to the battery pack; the seventh switch and the eighth switch are connected in series and then connected in parallel to the capacitor; and a series connection point of the fifth switch and the sixth switch is connected to a series connection point of the seventh switch and the eighth switch by using the third inductor.

11. The system according to claim 10, wherein the first cycle comprises a first discharging time period, a second discharging time period, and a third discharging time period, the first discharging time period is earlier than the second discharging time period, and the second discharging time period is earlier than the third discharging time period; and
the sampling control unit is configured to: based on the switching duty cycle and the switching frequency of each switch, control, in the first discharging time period, the sixth switch and the seventh switch to be turned off and the fifth switch and the eighth switch to be turned on; control, in the second discharging time period, the sixth switch and the eighth switch to be turned off and the fifth switch and the seventh switch to be turned on; and control, in the third discharging time period, the fifth switch and the eighth switch to be turned off and the sixth switch and the seventh switch to be turned on.

12. The system according to claim 10, wherein the second cycle comprises a first charging time period, a second charging time period, and a third charging time period, the first charging time period is earlier than the second charging time period, and the second charging time period is earlier than the third charging time period; and
the sampling control unit is configured to: based on the switching duty cycle and the switching frequency of each switch, control, in the first charging time period, the fifth switch and the eighth switch to be turned off and the sixth switch and the seventh switch to be turned on; control, in the second charging time period, the sixth switch and the eighth switch to be turned off and the fifth switch and the seventh switch to be turned on; and control, in the third charging time period, the sixth switch and the seventh switch to be turned off and the fifth switch and the eighth switch to be turned on.

13. A power supply system, wherein the power supply system comprises a DC/DC conversion module and at least one battery system according to any one of claims 1 to 12, and battery systems are connected in parallel and then connected to the DC/DC conversion module.

14. The system according to claim 13, wherein the power supply system further comprises a power supply module and a power conversion module connected to the power supply module.

15. The system according to claim 14, wherein the power supply module comprises a photovoltaic array, and the power conversion module is a DC/DC conversion module.

16. The system according to claim 14, wherein the power supply module comprises a generator, and the power conversion module is an alternating current AC/DC conversion module.

17. The system according to any one of claims 14 to 16, wherein the power supply system further comprises a direct current bus and a DC/AC conversion module, the DC/DC conversion module and the power conversion module are separately connected to an input end of the DC/AC conversion module through the direct current bus, and an output end of the DC/AC conversion module is connected to an alternating current load or an alternating current power grid.
